# EUROPÄISCHE PATENTSCHRIFT

(11) **EP 4 204 845 B1**
(45) Veröffentlichungstag und Bekanntmachung des Hinweises auf die Patenterteilung: **15.04.2026**
(21) Anmeldenummer: 21763362.7
(22) Anmeldetag: 23.08.2021
(51) Int. Cl.: G01S 7/40, G01S 13/02

(54) **MEHRKANALEMPFANGSSYSTEME, VERFAHREN ZUM KALIBRIEREN EINES MEHRKANALEMPFANGSSYSTEMS UND VERFAHREN ZUM SIMULIEREN EINES EMPFANGS EINER VORBESTIMMTEN WELLE AN EINEM MEHRKANALEMPFANGSSYSTEM**
MULTI-CHANNEL RECEIVING SYSTEMS, METHOD FOR CALIBRATING A MULTI-CHANNEL RECEIVING SYSTEM, AND METHOD FOR SIMULATING RECEPTION OF A PREDETERMINED WAVE AT A MULTI-CHANNEL RECEIVING SYSTEM
SYSTÈMES DE RÉCEPTION MULTI-CANAL, PROCÉDÉ D'ÉTALONNAGE DE SYSTÈME DE RÉCEPTION MULTI-CANAL ET PROCÉDÉ DE SIMULATION DE RÉCEPTION DONDE PRÉDÉFINIE AU NIVEAU D'UN SYSTÈME DE RÉCEPTION MULTI-CANAL

(30) Priorität: 31.08.2020 DE 102020122708
(43) Veröffentlichungstag der Anmeldung: 05.07.2023
(73) Patentinhaber: Fraunhofer-Gesellschaft zur Förderung der angewandten Forschung e.V., 80686 München (DE)
(72) Erfinder: STAUFENBIEL, Björn, 53343 Wachtberg (DE); FRÖHLICH, Andreas, 53343 Wachtberg (DE)
(74) Vertreter: 2SPL Patentanwälte PartG mbB
(86) Internationale Anmeldenummer: PCT/EP2021/073227
(87) Internationale Veröffentlichungsnummer: WO 2022/043242

(56) Entgegenhaltungen:
- WO-A1-2014/191795
- US-A- 3 229 289
- US-A- 4 719 465

## Beschreibung

### Technisches Gebiet

Die vorliegende Offenbarung befasst sich mit Mehrkanalempfangssystemen. Insbesondere betreffen Ausführungsbeispiele Mehrkanalempfangssysteme, Verfahren zum Kalibrieren eines Mehrkanalempfangssystems sowie Verfahren zum Simulieren eines Empfangs einer vorbestimmten Welle an einem Mehrkanalempfangssystem.

### Hintergrund

Ein verteiltes Multisensorempfangssystem tastet ein gemeinsames Wellenfeld ab und benötigt hierzu eine kohärente Abtastung und Signalverarbeitung in den einzelnen N-Empfangskanälen. Für das zugehörige Beamforming ist es von Bedeutung, dass das relative Phasen- und Amplitudenverhalten der Übertragungsfunktionen der einzelnen Empfangskanäle bekannt ist.

Für eine gleichzeitige Kalibration werden alle Empfangskanäle mit einem bekannten, eindeutigen Referenzsignal angeregt. Dabei müssen die verschiedenen Verkopplungseffekte zwischen den N-Empfangskanälen berücksichtigt werden. Bei gewöhnlichen Kalibrationsverfahren wird dazu entweder eine externe Kalibrationsantenne, welche ein Referenzsignal mit bekanntem Ausbreitungsverhalten auf alle Empfangskanäle überträgt, oder eine Einkopplung eines Referenzsignals mit einem festen Verteilnetzwerk direkt in die N-Empfangsmoduleingänge verwendet. Damit kann jedoch kein Kalibrationssignal mit beliebigem zeitlichem Verlauf zu den einzelnen Empfangskanälen verteilt werden, dass eine eindeutige Zuordnung der relevanten Ein- und Ausgangssignale des zu kalibrierenden Empfangskanals bei gleichzeitiger Identifizierung der empfangenen Störsignale ermöglicht. Ebenfalls ist mit diesen Ansätzen eine Nachbildung des Empfangs einer beliebig orientierten ebenen Welle mit der Empfangsapertur nicht möglich.

Ferner betrifft Dokument US 4 719 465 A eine Monopuls-Radaranlage, die erste und zweite Strahler in symmetrischen Positionen zur Zentralachse aufweist, um Radarpulse in einem vordefinierten Zyklus auszusenden und somit erste und zweite gerichtete Strahlungsmuster zu erzeugen. Eine Strahlformungsnetzwerk synthetisiert die ersten und zweiten gerichteten Strahlungsmuster in Phasen- und Gegenphasenbeziehung zu einem Summen- und Unterschiedsmuster. Ein Mehrkanal-Empfänger bildet aus den Summen- und Unterschiedsmustern ein Signal außerhalb der Zentralachse, das von der Zentralachse abweicht, sowie ein Nebenkeulen-unterdrücktes Signal, das durch Unterdrückung einer Nebenkeulenreaktion des Summenmusters entsteht. Die ersten und zweiten Richtkoppler sind auf den Übertragungswegen der Summen- und Unterschiedsmuster zwischen dem Strahlformungsnetzwerk und dem Mehrkanal-Empfänger angeordnet. Die ersten und zweiten Kalibrierungssignale gleicher Amplitude und Phase werden über die ersten und zweiten Richtkoppler auf die Übertragungskanäle der Summen- und Unterschiedsmuster eingespeist. Das Kalibrierungssignal wird am Ausgang des Mehrkanal-Empfängers detektiert und die Phaseneigenschaften zwischen den Übertragungskanälen der Summen- und Unterschiedsmuster werden entsprechend dem Ergebnis der Detektion kompensiert.

Dokument US 3 229 289 A betrifft zudem ein Mikrowellen-Monopuls-Simulationsgerät.

Weiterhin betrifft Dokument WO 2014/191795 A1 ein Empfängersystem und ein Verfahren zum Empfängertest. Das Empfängersystem enthält eine Selbsttestschaltung, bei der ein lokaler Oszillator-Testsignal von einem integrierten Frequenzvervielfacher erzeugt und in einem Abwärtsmischer mit einem RF-Testsignal gemischt wird. Das RF-Testsignal urch Up-Konvertierung eines extern erzeugten Niedrigfrequenz-Testsignals mit dem lokalen Oszillator-Testsignal erzeugt. Basisbandkomponenten können auch mit Testsignalen geeigneter Frequenz überprüft werden, die durch einen programmierbaren Frequenzteiler von dem lokalen Oszillator-Testsignal abgeteilt werden.

Vor diesem Hintergrund ist es eine Aufgabe, ein verbessertes Mehrkanalempfangssystem bereitzustellen.

### Zusammenfassung

Die Aufgabe wird erfindungsgemäß durch Mehrkanalempfangssysteme sowie Verfahren zum Kalibrieren eines Mehrkanalempfangssystems gemäß den unabhängigen Ansprüchen gelöst. Weitere Aspekte sowie Weiterbildungen der Erfindung sind in den abhängigen Ansprüchen, der folgenden Beschreibung sowie in den Figuren beschrieben.

Verfahren zum Simulieren eines Empfangs einer vorbestimmten Welle an einem Mehrkanalempfangssystem wird auch offenbart.

Ein erstes Ausführungsbeispiel betrifft ein erstes Mehrkanalempfangssystem. Das Mehrkanalempfangssystem umfasst eine Mehrzahl an Empfängerschaltungen für eine Mehrzahl an Empfangskanälen. Zumindest eine erste Empfängerschaltung und eine zweite Empfängerschaltung der Mehrzahl an Empfängerschaltungen umfassen jeweils einen Signaleingang, der ausgebildet ist, ein vorbestimmtes Referenzsignal zu empfangen, und eine Modulationsschaltung, die ausgebildet ist, das Referenzsignal basierend auf einem jeweiligen Steuerungssignal zu modulieren, um ein Kalibrierungssignal für die jeweilige Empfängerschaltung zu erzeugen. Ferner umfasst das Mehrkanalempfangssystem eine Speiseschaltung, die ausgebildet ist, das vorbestimmte Referenzsignal an den jeweiligen Signaleingang zumindest der ersten Empfängerschaltung und der zweiten Empfängerschaltung anzulegen. Das Mehrkanalempfangssystem umfasst weiterhin eine Steuerschaltung, die ausgebildet ist, das jeweilige Steuerungssignal für zumindest die erste Empfängerschaltung und die zweite Empfängerschaltung derart zu erzeugen, dass das Referenzsignal von der jeweiligen Modulationsschaltung für die jeweilige Empfängerschaltung individuell phasenmoduliert wird. Ein zweites Ausführungsbeispiel betrifft ein Verfahren zum Kalibrieren eines Mehrkanalempfangssystems. Das Mehrkanalempfangssystem umfasst eine Mehrzahl an Empfängerschaltungen für eine Mehrzahl an Empfangskanälen. Zumindest eine erste Empfängerschaltung und eine zweite Empfängerschaltung der Mehrzahl an Empfängerschaltungen umfassen jeweils einen Signaleingang, der ausgebildet ist, ein vorbestimmtes Referenzsignal zu empfangen, und eine Modulationsschaltung, die ausgebildet ist, das Referenzsignal basierend auf einem Steuerungssignal zu modulieren, um ein Kalibrierungssignal für die jeweilige Empfängerschaltung zu erzeugen. Das Verfahren umfasst ein Anlegen des vorbestimmten Referenzsignals an den jeweiligen Signaleingang zumindest der ersten Empfängerschaltung und der zweiten Empfängerschaltung. Ferner umfasst das Verfahren ein Erzeugen des jeweiligen Steuerungssignal für zumindest die erste Empfängerschaltung und die zweite Empfängerschaltung derart, dass das Referenzsignal von der jeweiligen Modulationsschaltung für die jeweilige Empfängerschaltung individuell phasenmoduliert wird.

Ein drittes Ausführungsbeispiel betrifft ein weiteres Mehrkanalempfangssystem. Das Mehrkanalempfangssystem umfasst eine Mehrzahl an Empfängerschaltungen für eine Mehrzahl an Empfangskanälen. Zumindest eine erste Empfängerschaltung und eine zweite Empfängerschaltung der Mehrzahl an Empfängerschaltungen umfassen jeweils einen Signaleingang, der mit einem der jeweiligen Empfängerschaltung zugeordneten Empfangselement koppelbar ist, um ein Empfangssignal für den jeweiligen Empfangskanal zu empfangen, und einen Signalgenerator, der ausgebildet ist, ein Kalibrierungssignal zu erzeugen, das für die jeweilige Empfängerschaltung individuell phasenmoduliert ist. Ferner umfassen zumindest die erste Empfängerschaltung und die zweite Empfängerschaltung der Mehrzahl an Empfängerschaltungen jeweils eine Signalverarbeitungsschaltung, die ausgebildet ist, basierend auf einem Eingangssignal ein digitales Ausgangssignal der jeweiligen Empfängerschaltung zu erzeugen, und eine Verteilerschaltung, die ausgebildet ist, das jeweilige Empfangssignal oder das von dem Signalgenerator der jeweiligen Empfängerschaltung erzeugte Kalibrierungssignal selektiv als Eingangssignal an die Signalverarbeitungsschaltung anzulegen.

Ein viertes Ausführungsbeispiel betrifft ein weiteres Verfahren zum Kalibrieren eines Mehrkanalempfangssystems. Das Mehrkanalempfangssystem umfasst eine Mehrzahl an Empfängerschaltungen für eine Mehrzahl an Empfangskanälen. Zumindest eine erste Empfängerschaltung und eine zweite Empfängerschaltung der Mehrzahl an Empfängerschaltungen umfassen jeweils einen Signaleingang, der mit einem der jeweiligen Empfängerschaltung zugeordneten Empfangselement koppelbar ist, um ein Empfangssignal für den jeweiligen Empfangskanal zu empfangen, und eine Signalverarbeitungsschaltung, die ausgebildet ist, basierend auf einem Eingangssignal ein digitales Ausgangssignal der jeweiligen Empfängerschaltung zu erzeugen. Für zumindest die erste Empfängerschaltung und die zweite Empfängerschaltung umfasst das Verfahren ein Erzeugen eines Kalibrierungssignals, das für die jeweilige Empfängerschaltung individuell phasenmoduliert ist, durch einen jeweiligen Signalgenerator der jeweiligen Empfängerschaltung. Ferner umfasst das verfahren für zumindest die erste Empfängerschaltung und die zweite Empfängerschaltung ein selektives Anlegen des von dem Signalgenerator der jeweiligen Empfängerschaltung erzeugten Kalibrierungssignals an die jeweilige Signalverarbeitungsschaltung durch eine jeweilige Verteilerschaltung der jeweiligen Empfängerschaltung.

Die erfindungsgemäßen Mehrkanalempfangssysteme und Verfahren gemäß den ersten bis vierten Ausführungsbeispielen ermöglichen eine individuelle Phasenbewertung für den jeweiligen Empfangskanal, so dass eine eindeutige Diskriminierung des jeweiligen Kalibrierungssignals von sonstigen, eingekoppelten Störanteilen ermöglicht wird. In einer anschließende Signalauswertung kann das Kalibrierungssignal aus dem empfangenen Gesamtspektrum extrahiert und somit eine eindeutige Bestimmung des Übertragungsverhaltens des jeweiligen Empfangskanals ermöglicht werden. Entsprechend ist eine simultane Kalibrierung der Empfangskanäle möglich.

Ein fünftes Ausführungsbeispiel betrifft ein Mehrkanalempfangssystem zum Simulieren eines Empfangs einer vorbestimmten Welle an dem Mehrkanalempfangssystem. Das Mehrkanalempfangssystem umfasst eine Mehrzahl an Empfängerschaltungen für eine Mehrzahl an Empfangskanälen. Die Mehrzahl an Empfängerschaltungen umfassen jeweils einen Signaleingang, der mit einem der jeweiligen Empfängerschaltung zugeordneten Empfangselement koppelbar ist, um ein reales Empfangssignal für den jeweiligen Empfangskanal zu empfangen, und einen zweiten Signaleingang, der ausgebildet ist, ein vorbestimmtes Referenzsignal zu empfangen. Ferner umfassen die Mehrzahl an Empfängerschaltungen jeweils eine Modulationsschaltung, die ausgebildet ist, das Referenzsignal basierend auf einem Steuerungssignal zu modulieren, um ein synthetisches Empfangssignals für die jeweilige Empfängerschaltung zu erzeugen. Das Mehrkanalempfangssystem umfasst eine Speiseschaltung, die ausgebildet ist, das vorbestimmte Referenzsignal an den jeweiligen zweiten Signaleingang zumindest einer Teilmenge der Mehrzahl an Empfängerschaltungen anzulegen. Weiterhin umfasst das Mehrkanalempfangssystem eine Steuerschaltung, die ausgebildet ist, das jeweilige Steuerungssignal für zumindest die Teilmenge der Mehrzahl an Empfängerschaltungen basierend auf Informationen, die für den jeweiligen Empfangskanal ein erwartetes Empfangssignal bei tatsächlichem Empfang der vorbestimmten Welle durch das der jeweiligen Empfängerschaltung zugeordnete Empfangselement anzeigen, zu erzeugen.

Ein sechstes Ausführungsbeispiel betrifft ein Verfahren zum Simulieren eines Empfangs einer vorbestimmten Welle an einem Mehrkanalempfangssystem. Das Mehrkanalempfangssystem umfasst eine Mehrzahl an Empfängerschaltungen für eine Mehrzahl an Empfangskanälen. Die Mehrzahl an Empfängerschaltungen umfassen jeweils einen Signaleingang, der mit einem der jeweiligen Empfängerschaltung zugeordneten Empfangselement koppelbar ist, um ein reales Empfangssignal für den jeweiligen Empfangskanal zu empfangen, einen zweiten Signaleingang, der ausgebildet ist, ein vorbestimmtes Referenzsignal zu empfangen, und eine Modulationsschaltung, die ausgebildet ist, das Referenzsignal basierend auf einem Steuerungssignal zu modulieren, um ein synthetisches Empfangssignal für die jeweilige Empfängerschaltung zu erzeugen. Das Verfahren umfasst ein Anlegen des vorbestimmten Referenzsignals an den jeweiligen zweiten Signaleingang zumindest einer Teilmenge der Mehrzahl an Empfängerschaltungen sowie ein Erzeugen des jeweiligen Steuerungssignals für zumindest die Teilmenge der Mehrzahl an Empfängerschaltungen basierend auf Informationen, die für den jeweiligen Empfangskanal ein erwartetes Empfangssignal bei tatsächlichem Empfang der vorbestimmten Welle durch das der jeweiligen Empfängerschaltung zugeordnete Empfangselement anzeigen.

Ein siebtes Ausführungsbeispiel betrifft ein weiteres Mehrkanalempfangssystem zum Simulieren eines Empfangs einer vorbestimmten Welle an dem Mehrkanalempfangssystem. Das Mehrkanalempfangssystem umfasst eine Mehrzahl an Empfängerschaltungen für eine Mehrzahl an Empfangskanälen. Zumindest eine Teilmenge der Mehrzahl an Empfängerschaltungen umfasst jeweils einen ersten Signaleingang, der mit einem der jeweiligen Empfängerschaltung zugeordneten Empfangselement koppelbar ist, um ein reales Empfangssignal für den jeweiligen Empfangskanal zu empfangen, und einen Signalgenerator, der ausgebildet ist, basierend auf Informationen, die für den jeweiligen Empfangskanal ein erwartetes Empfangssignal bei tatsächlichem Empfang der vorbestimmten Welle durch das der jeweiligen Empfängerschaltung zugeordnete Empfangselement anzeigen, ein synthetisches Empfangssignal für die jeweilige Empfängerschaltung zu erzeugen. Ferner umfasst zumindest die Teilmenge der Mehrzahl an Empfängerschaltungen jeweils eine Signalverarbeitungsschaltung, die ausgebildet ist, basierend auf einem Eingangssignal ein digitales Ausgangssignal der jeweiligen Empfängerschaltung zu erzeugen, und eine Verteilerschaltung, die ausgebildet ist, das von dem Signalgenerator der jeweiligen Empfängerschaltung erzeugte synthetische Empfangssignal selektiv als Eingangssignal an die Signalverarbeitungsschaltung der jeweiligen Empfängerschaltung anzulegen.

Ein achtes Ausführungsbeispiel betrifft ein weiteres Verfahren zum Simulieren eines Empfangs einer vorbestimmten Welle an einem Mehrkanalempfangssystem. Das Mehrkanalempfangssystem umfasst eine Mehrzahl an Empfängerschaltungen für eine Mehrzahl an Empfangskanälen. Die Mehrzahl an Empfängerschaltungen umfassen jeweils einen ersten Signaleingang, der mit einem der jeweiligen Empfängerschaltung zugeordneten Empfangselement koppelbar ist, um ein reales Empfangssignal für den jeweiligen Empfangskanal zu empfangen, und eine Signalverarbeitungsschaltung, die ausgebildet ist, basierend auf einem Eingangssignal ein digitales Ausgangssignal der jeweiligen Empfängerschaltung zu erzeugen. Für zumindest eine Teilmenge der Mehrzahl an Empfängerschaltungen umfasst das Verfahren ein Erzeugen eines synthetischen Empfangssignals für die jeweilige Empfängerschaltung durch einen jeweiligen Signalgenerator der jeweiligen Empfängerschaltung basierend auf Informationen, die für den jeweiligen Empfangskanal ein erwartetes Empfangssignal bei tatsächlichem Empfang der vorbestimmten Welle durch das der jeweiligen Empfängerschaltung zugeordnete Empfangselement anzeigen. Ferner umfasst das Verfahren für zumindest die Teilmenge der Mehrzahl an Empfängerschaltungen ein selektives Anlegen des von dem Signalgenerator der jeweiligen Empfängerschaltung erzeugten synthetischen Empfangssignals an die Signalverarbeitungsschaltung der jeweiligen Empfängerschaltung.

Die Mehrkanalempfangssysteme und Verfahren gemäß den fünften bis achten Ausführungsbeispielen ermöglichen die Nachbildung bzw. Simulation des Empfangs einer beliebigen Welle (z.B. einer beliebig orientierten ebenen Welle) an dem Mehrkanalempfangssysstem und sind nicht Teil der Erfindung.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
Fig. 1 zeigt ein erstes Ausführungsbeispiel eines Mehrkanalempfangssystems;
Fig. 2 zeigt ein erstes Ausführungsbeispiel einer Empfängerschaltung;
Fig. 3 zeigt ein zweites Ausführungsbeispiel einer Empfängerschaltung;
Fig. 4 zeigt ein Ablaufdiagramm eines Ausführungsbeispiels eines Verfahrens zum Kalibrieren eines Mehrkanalempfangssystems;
Fig. 5 zeigt ein Ablaufdiagramm eines Ausführungsbeispiels eines Verfahrens zum Simulieren eines Empfangs einer vorbestimmten Welle an einem Mehrkanalempfangssystem;
Fig. 6 zeigt ein zweites Ausführungsbeispiel eines Mehrkanalempfangssystems;
Fig. 7 zeigt ein drittes Ausführungsbeispiel einer Empfängerschaltung;
Fig. 8 zeigt ein Ablaufdiagramm eines weiteren Ausführungsbeispiels eines Verfahrens zum Kalibrieren eines Mehrkanalempfangssystems; und
Fig. 9 zeigt ein Ablaufdiagramm eines weiteren Ausführungsbeispiels eines Verfahrens zum Simulieren eines Empfangs einer vorbestimmten Welle an einem Mehrkanalempfangssystem.

### Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

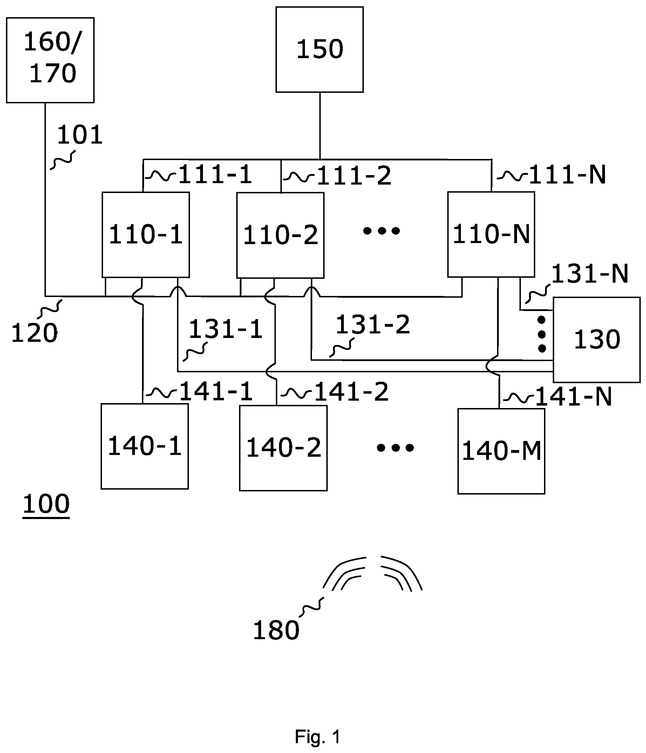

Fig. 1 zeigt ein (z.B. Radar-) Mehrkanalempfangssystem 100 mit N Empfangskanälen, wobei N eine natürliche Zahl ist und N ≥ 2 ist. Dazu umfasst das Mehrkanalempfangssystem 100 eine Mehrzahl von N Empfängerschaltungen 110-1, 110-2, ..., 110-N für die Mehrzahl an Empfangskanälen. Ferner umfasst das Mehrkanalempfangssystem 100 eine Mehrzahl an M verteilten Empfangselementen 140-1, 140-2, ..., 140-M für die zu empfangende bzw. zu messende elektromagnetische Strahlung. Die Anzahl M an Empfangselementen kann gleich der Anzahl N an Empfängerschaltungen sein, so dass jeder der Empfängerschaltungen 110-1, 110-2, ..., 110-N eine jeweiliges der Mehrzahl an Empfangselementen 140-1, 140-2, ..., 140-M zugeordnet ist. Alternativ kann die Anzahl M an Empfangselementen auch von der Anzahl N an Empfängerschaltungen verschieden sein. Beispielsweise kann die Anzahl M an Empfangselementen doppelt so groß wie die Anzahl N an Empfängerschaltungen sein, so dass jeder der Empfängerschaltungen 110-1, 110-2, ..., 110-N zwei der Mehrzahl an Empfangselementen 140-1, 140-2, ..., 140-M zugeordnet sind. Die Mehrzahl an Empfangselementen 140-1, 140-2, ..., 140-M können z.B. Antennen sein.

Während des (Empfangs- bzw. Normal)Betriebs des Mehrkanalempfangssystems 100 empfangen die Mehrzahl an Empfangselementen 140-1, 140-2, ..., 140-M zumindest zum Teil eine oder mehrere elektromagnetische Wellen 180 (z.B. Radarwellen) und geben jeweils ein Empfangssignal 141-1, 141-2, ..., 141-N für den jeweiligen Empfangskanal an die zugeordnete Empfängerschaltung der Mehrzahl an Empfängerschaltungen 110-1, 110-2, ..., 110-N aus.

Zur Kalibrierung der N Empfangskanäle bzw. der Mehrzahl von N Empfängerschaltungen 110-1, 110-2, ..., 110-N umfasst das Mehrkanalempfangssystem ferner eine Speiseschaltung 120 und eine Steuerschaltung 130.

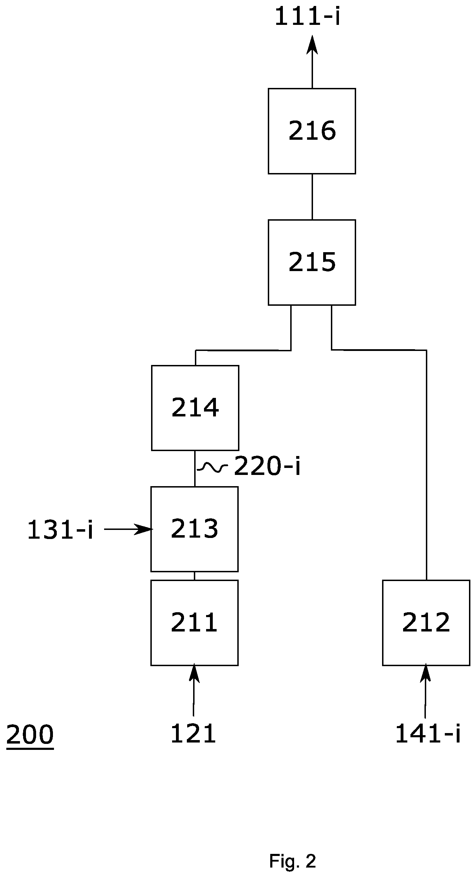

Der Kalibrierungsprozess wird nachfolgend ferner unter Bezugnahme auf Fig. 2 näher erläutert. Fig. 2 zeigt eine Empfängerschaltung 200. Zumindest die erste Empfängerschaltung 110-1 und die zweite Empfängerschaltung 110-2 der Mehrzahl an Empfängerschaltungen 110-1, 110-2, ..., 110-N des Mehrkanalempfangssystems 100 sind dabei wie die Empfängerschaltung 200 ausgebildet. Optional können auch die weiteren Empfängerschaltungen der Mehrzahl an Empfängerschaltungen 110-1, 110-2, ..., 110-N wie die Empfängerschaltung 200 ausgebildet sein.

Die Empfängerschaltung 200 umfasst einen ersten Signaleingang 211, der ausgebildet ist, ein vorbestimmtes Referenzsignal 121 zu empfangen. Das Referenzsignal 121 wird von der Speiseschaltung 120 bereitgestellt bzw. an den Signaleingang 211 angelegt. Bezogen auf die Mehrzahl an Empfängerschaltungen 110-1, 110-2, ..., 110-N des Mehrkanalempfangssystems 100 ist die Speiseschaltung 120 somit ausgebildet, das vorbestimmte Referenzsignal 121 (z.B. parallel bzw. simultan) an den jeweiligen ersten Signaleingang 211 zumindest der ersten Empfängerschaltung 110-1 und der zweiten Empfängerschaltung 110-2 anzulegen. Optional kann die Speiseschaltung 120 ausgebildet sein, das vorbestimmte Referenzsignal 121 (z.B. parallel bzw. simultan) an den jeweiligen Signaleingang 211 jeder der Mehrzahl an Empfängerschaltungen 110-1, 110-2, ..., 110-N anzulegen. Die Speiseschaltung 120 kann als ein Verteilernetzwerk für das Referenzsignal 121 verstanden werden. Die Speiseschaltung 120 kann dazu eine Mehrzahl an Signalleitungen umfassen, um das Referenzsignal 121 an den jeweiligen ersten Signaleingang der Empfängerschaltung anzulegen. Das Referenzsignal 121 kann beispielsweise eine Oszillationssignal wie etwa ein Sinussignal oder ein Rechtecksignal sein. Es ist zu beachten, dass das gleiche Referenzsignal an jede der Empfängerschaltungen verteilt wird.

Beispielsweise kann das Mehrkanalempfangssystem 100 einen Signalgenerator 150 umfassen, der mit der Speiseschaltung 120 gekoppelt und ausgebildet ist, das Referenzsignal 121 zu erzeugen. Der Signalgenerator 150 kann z.B. einen oder mehrere Oszillatoren und/oder eine oder mehrere Phasenregelschleifen umfassen für die Erzeugung des Referenzsignals 121. Alternativ kann Mehrkanalempfangssystem 100 einen Referenzsignaleingang 160 umfassen, der mit der Speiseschaltung 120 gekoppelt und ausgebildet ist, das Referenzsignal 121 von einem zu dem Mehrkanalempfangssystem 100 externen Signalgenerator (nicht dargestellt) zu empfangen.

Die Empfängerschaltung 200 umfasst weiterhin einen zweiten Signaleingang 212, der mit dem der jeweiligen Empfängerschaltung zugeordneten Empfangselement der Mehrzahl an Empfangselementen 140-1, 140-2, ..., 140-M koppelbar ist bzw. gekoppelt ist, um das Empfangssignal 141-i für den jeweiligen Empfangskanal i zu empfangen (i = 1 ... N). Für die Kalibrierung wird das jeweilige Empfangssignal 141-i nicht verwendet.

Für die Kalibrierung der Empfängerschaltung 200 umfasst diese eine Modulationsschaltung 213, die mit dem ersten Signaleingang 211 gekoppelt und ausgebildet ist, das Referenzsignal 120 basierend auf einem jeweiligen Steuerungssignal 131-i zu modulieren, um ein Kalibrierungssignal 220-i für die Empfängerschaltung 200 zu erzeugen. Das jeweilige Steuersignal Steuerungssignal 131-i kann z.B. an einem weiteren, in Fig. 2 nicht dargestellten Signaleingang der Empfängerschaltung 200 von der Steuerschaltung 130 empfangen werden. Bezogen auf die Mehrzahl an Empfängerschaltungen 110-1, 110-2, ..., 110-N des Mehrkanalempfangssystems 100 bedeutet dies, dass die Modulationsschaltung 213 der Empfängerschaltung 110-1 das Referenzsignal 120 basierend auf dem Steuerungssignal 131-1 moduliert, um ein erstes Kalibrierungssignal für die Empfängerschaltung 110-1 zu erzeugen, während die Modulationsschaltung 213 der Empfängerschaltung 110-2 das Referenzsignal 120 basierend auf dem Steuerungssignal 131-2 moduliert, um ein zweites Kalibrierungssignal für die Empfängerschaltung 110-2 zu erzeugen, etc. Mit anderen Worten: Die jeweilige Modulationsschaltung 213 zumindest der ersten Empfängerschaltung 110-1 und der zweiten Empfängerschaltung 110-2 ist ausgebildet, das Referenzsignal 120 basierend auf dem jeweiligen Steuerungssignal 131-1 bzw. 131-2 zu modulieren, um ein Kalibrierungssignal für die jeweilige Empfängerschaltung 110-1 bzw. 110-2 zu erzeugen. Optional können auch die Modulationsschaltungen der weiteren Empfängerschaltungen der Mehrzahl an Empfängerschaltungen 110-1, 110-2, ..., 110-N derart ausgebildet sein.

Die Steuerschaltung 130 ist dabei ausgebildet, das jeweilige Steuerungssignal 131-1 bzw. 131-2 für zumindest die erste Empfängerschaltung 110-1 und die zweite Empfängerschaltung 110-2 derart zu erzeugen, dass das Referenzsignal 121 von der jeweiligen Modulationsschaltung 213 für die jeweilige Empfängerschaltung 110-1 bzw. 110-2 individuell phasenmoduliert wird. Mit anderen Worten: Das von der Modulationsschaltung 213 der ersten Empfängerschaltung 110-1 erzeugte erste Kalibrierungssignal für die erste Empfängerschaltung 110-1 und das von der Modulationsschaltung 213 der zweiten Empfängerschaltung erzeugte zweite Kalibrierungssignal für die zweite Empfängerschaltung 100-2 sind unterschiedlich phasenmoduliert. Beispielsweise können das von der Modulationsschaltung 213 der ersten Empfängerschaltung 110-1 erzeugte erste Kalibrierungssignal für die erste Empfängerschaltung 110-1 und das von der Modulationsschaltung 213 der zweiten Empfängerschaltung 110-2 erzeugte zweite Kalibrierungssignal für die zweite Empfängerschaltung 110-2 zueinander phasenverschobene Replikate des Referenzsignals 121 sein. Beispielsweise kann die Modulationsschaltung 213 der ersten Empfängerschaltung 110-1 über das Steuerungssignal 131-1 angesteuert werden, die Phase des Referenzsignals 121 in eine erste Richtung zu drehen, um das erste Kalibrierungssignal für die erste Empfängerschaltung 110-1 zu erhalten, und die Modulationsschaltung 213 der zweiten Empfängerschaltung 110-2 kann über das Steuerungssignal 131-2 angesteuert werden, die Phase des Referenzsignals 121 in eine von der ersten Richtung verschiedene zweite Richtung zu drehen, um das zweite Kalibrierungssignal für die zweite Empfängerschaltung 110-2 zu erhalten.

Optional kann die Steuerschaltung 130 entsprechend ausgebildet sein, auch für die weiteren Empfängerschaltungen der Mehrzahl an Empfängerschaltungen 110-1, 110-2, ..., 110-N eine jeweiliges Steuerungssignal 131-i zu erzeugen. Mit anderen Worten: Die Steuerschaltung 130 kann optional ausgebildet sein, das jeweilige Steuerungssignal 131-1, ..., 131-N für jede der Mehrzahl an Empfängerschaltungen 110-1, 110-2, ..., 110-N derart zu erzeugen, dass das Referenzsignal 121 von der jeweiligen Modulationsschaltung der jeweiligen Empfängerschaltung 110-1, 110-2, ..., 110-N individuell phasenmoduliert wird. Somit kann für jeden Empfangskanal bzw. für jede der Mehrzahl an Empfängerschaltungen 110-1, 110-2, ..., 110-N ein Kalibrierungssignal mit individueller Phasenmodulation erhalten werden.

Die Modulationsschaltung 213 kann beispielsweise als ein steuerbarer Phasenschieber oder eines oder mehrere steuerbare Verzögerungselemente ausgebildet sein. Dabei ist jedoch zu beachten, dass die vorgenannten Ausgestaltungen der Modulationsschaltung 213 rein beispielhaft gewählt sind und die Modulationsschaltung 213 auch anders ausgebildet sein kann.

Optional kann die Empfängerschaltung 200 auch eine oder mehrere Komponenten zur weiteren Verarbeitung des jeweiligen Kalibrierungssignals 220-i umfassen. Beispielsweise kann die Empfängerschaltung 200 ein Dämpfungsglied 214 umfassen, das ausgebildet ist, einen Signalpegel des von der Modulationsschaltung 213 jeweils erzeugten Kalibrierungssignals 220-i auf einen vorbestimmten Wert bzw. Pegel einzustellen. Dabei ist jedoch zu beachten, dass das Dämpfungsglied 214 rein beispielhaft gewählt ist und die Empfängerschaltung 200 zusätzlich oder anstelle des Dämpfungsglied 214 auch eine oder mehrere sonstige Komponenten aufweisen kann, um eine Signaleigenschaft des jeweiligen Kalibrierungssignals 220-i zu verändern bzw. einzustellen.

Die Empfängerschaltung 200 umfasst weiterhin eine Signalverarbeitungsschaltung 216, die ausgebildet ist, basierend auf einem (z.B. analogen) Eingangssignal ein jeweiliges digitales Ausgangssignal 111-i der Empfängerschaltung 200 zu erzeugen. Bezogen auf die Mehrzahl an Empfängerschaltungen 110-1, 110-2, ..., 110-N des Mehrkanalempfangssystems 100 bedeutet dies, dass die jeweilige Signalverarbeitungsschaltung 216 zumindest der ersten Empfängerschaltung 110-1 und der zweiten Empfängerschaltung 110-2 ausgebildet ist, basierend auf einem jeweiligen Eingangssignal das digitale Ausgangssignal 111-1 bzw. 111-2 der jeweiligen Empfängerschaltung 110-1 bzw. 110-2 zu erzeugen. Optional können auch die Signalverarbeitungsschaltungen 216 der weiteren Empfängerschaltungen der Mehrzahl an Empfängerschaltungen 110-1, 110-2, ..., 110-N derart ausgebildet sein, um ein jeweiliges digitales Ausgangssignal 111-1, 111-2, ..., 111-N bereitzustellen.

Die Signalverarbeitungsschaltung 216 kann eine Vielzahl an Komponenten zur Verarbeitung des Eingangssignals aufweisen. Beispielsweise kann die Signalverarbeitungsschaltung 216 eines oder mehrere Filter, einen oder mehrere Verstärker, einen oder mehrere Begrenzer, einen oder mehrere Phasenschieber, eines oder mehrere Dämpfungsglieder und/oder einen oder mehrere Analog-zu-Digital Wandler umfassen. Dabei ist jedoch zu beachten, dass die vorgenannten Komponenten rein beispielhaft gewählt sind und die Signalverarbeitungsschaltung 216 auch weniger, mehr oder andere Komponenten aufweisen kann.

Ferner umfasst die Empfängerschaltung 200 eine Verteilerschaltung 215, die ausgebildet ist, das jeweilige Empfangssignal 141-i oder das von der Modulationsschaltung 213 der Empfängerschaltung 200 jeweils erzeugte Kalibrierungssignal 220-i selektiv als Eingangssignal an die Signalverarbeitungsschaltung 216 anzulegen. Dazu kann die Verteilerschaltung 215 z.B. einen oder mehrere miteinander gekoppelte Schalter aufweisen. Entsprechend kann z.B. während des (Empfangs- bzw. Normal-)Betriebs des Mehrkanalempfangssystems 100 das jeweilige Empfangssignal 141-i an die Signalverarbeitungsschaltung 216 angelegt werden, so dass das jeweilige digitale Ausgangssignal 111-i auf dem jeweiligen Empfangssignal 141-i basiert. Während der Kalibrierung kann entsprechend das von der Modulationsschaltung 213 der Empfängerschaltung 200 jeweils erzeugte Kalibrierungssignal 220-i an die Signalverarbeitungsschaltung 216 angelegt werden, so dass das jeweilige digitale Ausgangssignal 111-i auf dem jeweiligen Kalibrierungssignal 220-i basiert.

Wieder Bezug nehmend auf Fig. 1 umfasst das Mehrkanalempfangssystem 100 ferner eine Auswerteschaltung 150, die ausgebildet ist, von zumindest der ersten Empfängerschaltung 110-1 und der zweiten Empfängerschaltung 110-2 das jeweilige Kalibrierungssignal und das jeweilige digitale Ausgangssignal 111-1 bzw. 111-2 zu erhalten. Beispielsweise können die erste Empfängerschaltung 110-1 und die zweite Empfängerschaltung 110-2 einen oder mehrere jeweilige Signalausgänge aufweisen, die mit der Auswerteschaltung 150 koppelbar sind bzw. gekoppelt sind und das jeweilige Kalibrierungssignal und das jeweilige digitale Ausgangssignal 111-1 bzw. 111-2 ausgeben. Die weiteren Empfängerschaltungen der Mehrzahl an Empfängerschaltungen 110-1, 110-2, ..., 110-N können entsprechend ausgeführt sein.

Wie zuvor beschrieben basiert das jeweilige digitale Ausgangssignal 111-1 bzw. 111-2 der ersten Empfängerschaltung 110-1 und der zweiten Empfängerschaltung 110-2 während der Kalibrierung auf dem von der Modulationsschaltung 213 der jeweiligen Empfängerschaltung 110-1 bzw. 110-2 jeweils erzeugten Kalibrierungssignal. Da der Auswerteschaltung 150 sowohl das Eingangssignal der jeweiligen Signalverarbeitungsschaltung 216 der ersten Empfängerschaltung 110-1 und der zweiten Empfängerschaltung 110-2 in Form der Kalibrierungssignale als auch die digitalen Ausgangssignale 111-1 bzw. 111-2 der jeweiligen Signalverarbeitungsschaltung 216 der ersten Empfängerschaltung 110-1 und der zweiten Empfängerschaltung 110-2 bereitgestellt werden, kann diese nunmehr das jeweilige Übertragungsverhalten der ersten Empfängerschaltung 110-1 und der zweiten Empfängerschaltung 110-2 bzw. das Übertragungsverhalten der Signalverarbeitungsschaltungen 216 der ersten Empfängerschaltung 110-1 und der zweiten Empfängerschaltung 110-2 durch einen entsprechenden Signalabgleich bestimmen. Dies kann gemäß bekannter Verfahren erfolgen. Das Übertragungsverhalten beschreibt die Beziehung zwischen dem Eingangs- und dem Ausgangssignal der jeweiligen Empfängerschaltung bzw. der Signalverarbeitungsschaltung der jeweiligen Empfängerschaltung.

Bezogen auf die Mehrzahl an Empfängerschaltungen 110-1, 110-2, ..., 110-N des Mehrkanalempfangssystems 100 kann die Auswerteschaltung 150 entsprechend ausgebildet sein, von jeder der Mehrzahl an Empfängerschaltung 110-1, 110-2, ..., 110-N das jeweilige Kalibrierungssignal und das jeweilige auf dem jeweiligen Kalibrierungssignal basierende digitale Ausgangssignal 111-1, 111-2, ..., 111-N zu erhalten. Entsprechend kann die Auswerteschaltung 150 ausgebildet sein, das jeweilige Übertragungsverhalten jeder der Mehrzahl an Empfängerschaltung 110-1, 110-2, ..., 110-N basierend auf dem jeweiligen Kalibrierungssignal und dem jeweiligen digitalen Ausgangssignal 111-1, 111-2, ..., 111-N zu bestimmen.

Aufgrund der jeweiligen Modulationsschaltung 213 der Empfängerschaltungen und des jeweils individuellen Steuerungssignals kann für den jeweiligen Empfangskanal bzw. die jeweilige Empfängerschaltung ein hinsichtlich der Phase individuell moduliertes Kalibrierungssignal bereitgestellt werden. Entsprechend kann für die Auswerteschaltung 150 eine eindeutige Diskriminierung des jeweiligen Kalibrierungssignals von sonstigen, eingekoppelten Störanteilen ermöglicht werden. Insbesondere kann bei der Signalauswertung durch die Auswerteschaltung 150 das jeweilige Kalibrierungssignal aus dem empfangenen Gesamtspektrum extrahiert und somit eine eindeutige Bestimmung des Übertragungsverhaltens des jeweiligen Empfangskanals ermöglicht werden. Entsprechend ist eine simultane Kalibrierung der Empfangskanäle möglich. Beispielsweise können so zumindest die erste Empfängerschaltung 110-1 und die zweite Empfängerschaltung 110-2 parallel (simultan) kalibriert werden.

Die vorgeschlagene Architektur ermöglicht die Verteilung eines Referenzsignals mit beliebigem zeitlichen Verlauf auf die einzelnen Empfangskanäle durch Einsatz einer individuellen Phasenmodulation in jedem Kanal, um so eine eindeutige Zuordnung der relevanten Ein- und Ausgangssignale des jeweiligen zu kalibrierenden Kanals bei gleichzeitiger Identifizierung der empfangenen Störsignale zu ermöglichen. Wie vorangehend beschrieben kann z.B. an jedem Empfangskanaleingang ein steuerbarer Phasenschieber oder Verzögerungsglieder eingesetzt werden, welche(r) das zur Kalibration bereitgestellte Referenzsignal individuell phasenmoduliert bzw. phasenmodulieren. Das jeweilige Kalibrierungssignal enthält daher eine individuelle Phasenbewertung an jedem Empfangskanal, welche eine eindeutige Diskriminierung des Kalibrierungssignals von den sonstigen, eingekoppelten Störanteilen erlaubt. Die vorgeschlagene Architektur ermöglicht daher eine eindeutige Identifizierung der über die Einzelstrahler empfangenen Störsignale sowie der in die jeweilige Signalverarbeitungsschaltung (z.B. in einen Analog-zu-Digital Wandler der Signalverarbeitungsschaltung) direkt übergekoppelten Störsignale. Die anschließende Signalauswertung ermöglicht eine Extrahierung des Referenzsignals aus dem empfangenen Gesamtspektrum und somit eine eindeutige Bestimmung des Übertragungsverhaltens der Empfangskanäle. Dadurch ist eine simultane Kalibration aller N-Empfangskanäle möglich.

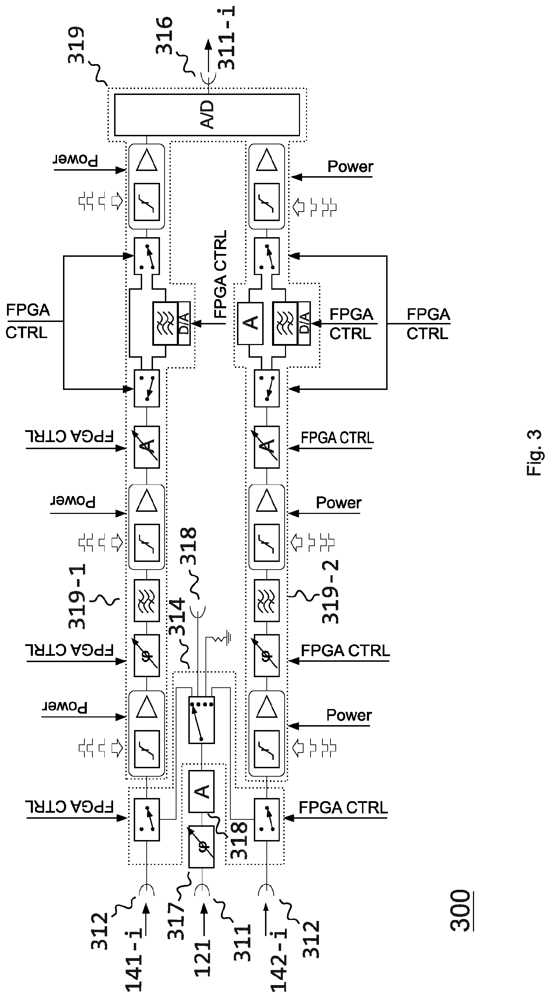

**Fig. 3** zeigt eine weitere Empfängerschaltung 300, die gegenüber der vorangehend beschriebenen Empfängerschaltung 200 erweitert ist. Zumindest die erste Empfängerschaltung 110-1 und die zweite Empfängerschaltung 110-2 der Mehrzahl an Empfängerschaltungen 110-1, 110-2, ..., 110-N des Mehrkanalempfangssystems 100 können wie die Empfängerschaltung 300 ausgebildet. Optional können auch die weiteren Empfängerschaltungen der Mehrzahl an Empfängerschaltungen 110-1, 110-2, ..., 110-N wie die Empfängerschaltung 300 ausgebildet sein.

Wie die Empfängerschaltung 200 umfasst auch die Empfängerschaltung 300 einen ersten Signaleingang 311 für das Referenzsignal 121 sowie einen zweiten Signaleingang für das Empfangssignal 141-i des jeweiligen Empfangskanals. Zusätzlich umfasst die Empfängerschaltung 200 einen dritten Signaleingang 313, der mit einem weiteren der Empfängerschaltung 300 zugeordneten Empfangselement koppelbar ist bzw. gekoppelt ist, um ein weiteres Empfangssignal 142-i für den jeweiligen Empfangskanal zu empfangen. Die Empfängerschaltung 300 kann z.B. genutzt werden, wenn das Empfangssignal 141-i und das weitere Empfangssignal 142-i unterschiedliche Polarisationen (z.B. horizontal und vertikal) aufweisen.

Die Signalverarbeitungsschaltung 319 der Empfängerschaltung 300 ist entsprechend angepasst und weist einen ersten Signalverarbeitungspfad 319-1 für das Empfangssignal 141-i und einen zweiten Signalverarbeitungspfad 319-2 für das weitere Empfangssignal 142-i auf. An einem Signalausgang 316 der Empfängerschaltung 300 wird das jeweilige digitale Ausgangssignal 111-i der Empfängerschaltung 300 ausgegeben. Im (Empfangs- bzw. Normal-)Betrieb des Mehrkanalempfangssystems 100 basiert das jeweilige digitale Ausgangssignal 111-i auf dem jeweiligen Empfangssignal 141-i sowie dem jeweiligen weiteren Empfangssignal 142-i des jeweiligen Empfangskanals.

In Fig. 3 ist ferner eine beispielhafte Ausgestaltung der Signalverarbeitungspfade 319-1 und 319-2 mit Filtern, Verstärkern, Dämpfungsgliedern, Phasenschiebern, Begrenzern, etc. dargestellt. Dabei ist jedoch zu beachten, dass die Ausgestaltung der Signalverarbeitungspfade 319-1 und 319-2 rein beispielhaft gewählt ist und die Signalverarbeitungsschaltung 319 auch weniger, mehr oder andere Komponenten aufweisen kann.

Analog zu der Empfängerschaltung 200 weist auch die Empfängerschaltung 300 eine Modulationsschaltung 317 auf, um durch entsprechende Modulation des Referenzsignals 121 das jeweilige individuelle Kalibrierungssignal für den jeweiligen Empfangskanal zu erzeugen.

In Fig. 3 ist ferner auch die Verteilerschaltung 314 für die Verteilung des Kalibrierungssignals gezeigt. In dem in Fig. 3 gezeigten Beispiel ist die Verteilerschaltung 314 mittels dreier Schalter realisiert. Aufgrund der hohen Isolierung der Schalter kann eine hohe Dämpfung zwischen den Signalverarbeitungspfaden 319-1 und 319-2 erzielt werden. Diese Ausgestaltung ist jedoch rein beispielhaft gewählt. Die Funktionalität der Verteilerschaltung 314 kann auch durch jegliche sonstige geeignete Ausgestaltung erzielt werden.

Die Verteilerschaltung 314 ist ausgebildet, das jeweilige Empfangssignal 141-1 oder das von der Modulationsschaltung 317 der Empfängerschaltung 300 jeweils erzeugte Kalibrierungssignal selektiv als Eingangssignal an den ersten Signalverarbeitungspfad 319-1 anzulegen. Ferner ist die Verteilerschaltung 314 ausgebildet, das jeweilige weitere Empfangssignal 142-1 oder das von der Modulationsschaltung 317 der Empfängerschaltung 317 jeweils erzeugte Kalibrierungssignal selektiv als Eingangssignal an den zweiten Signalverarbeitungspfad 319-2 anzulegen. Beispielsweise können die jeweiligen Empfangssignale 141-1 und 141-2 im Betrieb des Mehrkanalempfangssystems 100 an die Signalverarbeitungspfade 319-1 und 319-2 angelegt werden. Entsprechend kann das jeweilige Kalibrierungssignal während der Kalibrierung des Mehrkanalempfangssystems 100 an die Signalverarbeitungspfade 319-1 und 319-2 angelegt werden, so dass das jeweilige digitale Ausgangssignal 111-i auf dem jeweiligen, individuellen Kalibrierungssignal für den jeweiligen Empfangspfad basiert.

Ebenso kann die Verteilerschaltung 314 das jeweilige Kalibrierungssignal an einen weiteren Signalausgang 315 der Empfängerschaltung 300 ausgeben. Beispielsweise kann der weitere Signalausgang 315 mit der Auswerteschaltung 150 koppelbar sein bzw. gekoppelt sein, so dass die Auswerteschaltung 150 das jeweilige Kalibrierungssignal für die Bestimmung der Übertragungscharakteristik der Empfängerschaltung erhalten kann.

Auch kann die Verteilerschaltung 314 das jeweilige Kalibrierungssignal an einen Abschlusswiderstand von z.B. 50 Ω anlegen. Dies kann z.B. während des Betriebs des Mehrkanalempfangssystems 100 erfolgen, um das Kalibrierungssignal zusätzlich zu dämpfen und so die Isolierung zwischen den Signalverarbeitungspfaden 319-1 und 319-2 zu erhöhen.

Über die in den Signalverarbeitungspfaden 319-1 und 319-2 vorhandenen Phasenschieber kann die Phase des Kalibrierungssignal im jeweiligen Signalverarbeitungspfad 319-1 bzw. 319-2 nochmals verändert bzw. eingestellt werden, um das Kalibrierungssignal z.B. besser von Kalibrierungssignalen benachbarter Empfängerschaltungen unterscheidbar zu machen.

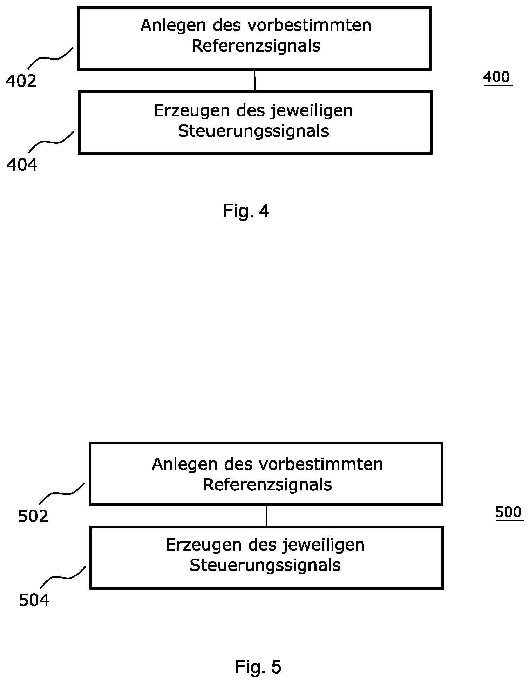

Um die vorgenannten Aspekte zur Kalibrierung des Mehrkanalempfangssystems 100 nochmals zusammenzufassen ist in **Fig. 4** ferner ein Ablaufdiagramm eines Verfahrens 400 zum Kalibrieren eines Mehrkanalempfangssystems dargestellt. Analog zu dem oben Beschriebenen umfasst das Mehrkanalempfangssystem dabei eine Mehrzahl an Empfängerschaltungen für eine Mehrzahl an Empfangskanälen. Zumindest eine erste Empfängerschaltung und eine zweite Empfängerschaltung der Mehrzahl an Empfängerschaltungen umfassen jeweils einen Signaleingang und eine Modulationsschaltung. Wie oben beschrieben, ist der Signaleingang ausgebildet bzw. fähig, ein vorbestimmtes Referenzsignal zu empfangen. Die Modulationsschaltung ist wie oben beschreiben ausgebildet bzw. fähig, das Referenzsignal basierend auf einem Steuerungssignal zu modulieren, um ein Kalibrierungssignal für die jeweilige Empfängerschaltung zu erzeugen.

Das Verfahren 400 umfasst ein (z.B. paralleles bzw. simultanes) Anlegen 402 des vorbestimmten Referenzsignals an den jeweiligen Signaleingang zumindest der ersten Empfängerschaltung und der zweiten Empfängerschaltung. Ferner umfasst das Verfahren 400 ein Erzeugen 404 des jeweiligen Steuerungssignal für zumindest die erste Empfängerschaltung und die zweite Empfängerschaltung derart, dass das Referenzsignal von der jeweiligen Modulationsschaltung für die jeweilige Empfängerschaltung individuell phasenmoduliert wird.

Gemäß dem Verfahren 400 kann für den jeweiligen Empfangskanal bzw. die jeweilige Empfängerschaltung ein hinsichtlich der Phase individuell moduliertes Kalibrierungssignal bereitgestellt werden. Bei einer anschließende Signalauswertung kann das jeweilige Kalibrierungssignal aus dem empfangenen Gesamtspektrum extrahiert und somit eine eindeutige Bestimmung des Übertragungsverhaltens des jeweiligen Empfangskanals ermöglicht werden. Entsprechend ist eine simultane Kalibrierung der Empfangskanäle möglich.

Weitere Details und Aspekte des Verfahrens 400 sind vorangehend in Zusammenhang mit den Figs. 1 bis 3 näher beschrieben. Das Verfahren 400 kann daher zusätzlich einen oder mehrere der vorangehend beschriebenen Aspekte umfassen.

Das vorangehend beschriebene Mehrkanalempfangssystem 100 kann gemäß einem weiteren Aspekt auch zum Simulieren eines Empfangs einer vorbestimmten Welle genutzt werden. Dies wird nachfolgend unter Bezugnahme auf **Fig. 5** näher beschrieben. Fig. 5 zeigt ein Ablaufdiagramm eines Verfahrens 500 zum Simulieren eines Empfangs einer vorbestimmten Welle an einem Mehrkanalempfangssystem wie dies vorangehend in Zusammenhang mit den Figs. 1 bis 3 beschrieben wurde.

Wie oben in Zusammenhang mit Fig. 1 und Fig. 2 näher beschrieben, ist der Signaleingang 212 jeder der Mehrzahl an Empfängerschaltungen 110-1, 110-2, ..., 110-N mit einem der jeweiligen Empfängerschaltung zugeordneten Empfangselement 140-1, 140-2 ..., 140-M koppelbar bzw. gekoppelt, um ein reales Empfangssignal 114-1, 141-2, ..., 141-N für den jeweiligen Empfangskanal von dem jeweils zugeordneten Empfangselement 140-1, 140-2 ..., 140-M zu empfangen.

Ferner können die Steuerschaltung 130 sowie die jeweilige Modulationsschaltung 213 bzw. 317 der Mehrzahl an Empfängerschaltungen 110-1, 110-2, ..., 110-N genutzt werden, um den Empfang der vorbestimmten Welle zu simulieren. Dazu kann die jeweilige Modulationsschaltung 213 bzw. 317 über die Steuerschaltung 130 angesteuert werden, das Referenzsignal 121 entsprechend zu modulieren.

Das Verfahren 500 umfasst daher ein (z.B. paralleles bzw. simultanes) Anlegen 502 des vorbestimmten Referenzsignals 121 an den jeweiligen Signaleingang 211 zumindest einer Teilmenge der Mehrzahl an Empfängerschaltungen 110-1, 110-2, ..., 110-N. Optional kann das vorbestimmte Referenzsignal 121 an den jeweiligen Signaleingang jeder der Mehrzahl an Empfängerschaltungen 110-1, 110-2, ..., 110-N angelegt werden.

Ferner umfasst das Verfahren 500 ein Erzeugen 504 des jeweiligen Steuerungssignals 131-1, 131-2, ..., 131-N für zumindest die Teilmenge der Mehrzahl an Empfängerschaltungen 110-1, 110-2, ..., 110-N basierend auf Informationen, die für den jeweiligen Empfangskanal ein erwartetes Empfangssignal bei tatsächlichem Empfang der vorbestimmten Welle durch das der jeweiligen Empfängerschaltung zugeordnete Empfangselement anzeigen. Beispielsweise erzeugt die Steuerschaltung 130 das Steuersignal 131-1 für die erste Empfängerschaltung 110-1 basierend auf Informationen, die für diesen Empfangskanal das erwartete Empfangssignal bei tatsächlichem Empfang der vorbestimmten Welle durch das der Empfängerschaltung 110-1 zugeordnete Empfangselement 140-1 anzeigen. Entsprechend erzeugt die Steuerschaltung 130 das Steuersignal 131-2 für die zweite Empfängerschaltung 110-2 basierend auf Informationen, die für diesen Empfangskanal das erwartete Empfangssignal bei tatsächlichem Empfang der vorbestimmten Welle durch das der Empfängerschaltung 110-2 zugeordnete Empfangselement 140-2 anzeigen. Entsprechend kann für jeden gewünschten Empfangskanal durch die jeweilige Modulationsschaltung ein synthetisches Empfangssignal anstatt des Kalibrierungssignals erzeugt werden, um so den Empfang der vorbestimmten Welle an dem Mehrkanalempfangssystem 100 zu simulieren. Das jeweilige synthetische Empfangssignal gibt das jeweilige erwartete Empfangssignal bei tatsächlichem Empfang der vorbestimmten Welle durch das der jeweiligen Empfängerschaltung zugeordnete Empfangselement an.

Ein weiterer Vorteil der vorgeschlagenen internen Referenzsignalverteilung mit z.B. Phasenschieber oder Verzögerungsglied in jedem Empfangskanal ist somit die Möglichkeit der Nachbildung des Empfangs einer z.B. beliebig orientierten ebenen Welle mit der Empfangsapertur.

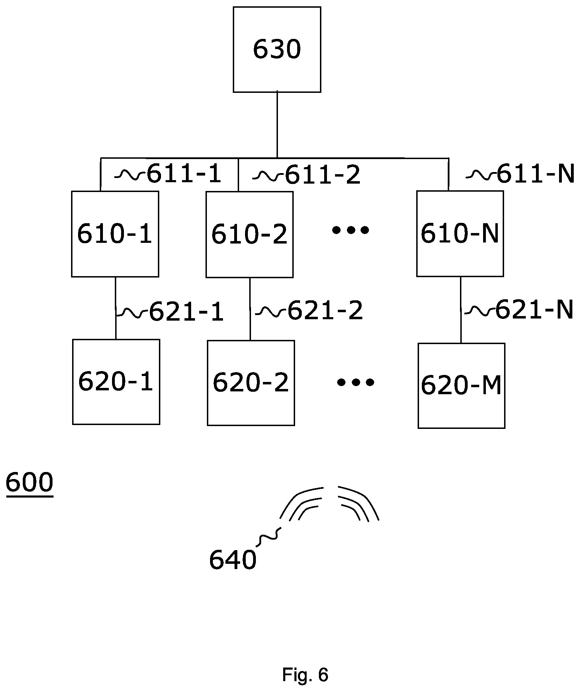

Im Folgenden wird unter Bezugnahme auf die Figs. 6 bis 8 noch eine alternative Ausgestaltung der vorgeschlagenen Architektur beschrieben, bei der das phasenmodulierte Kalibrierungssignal direkt in jedem Empfangskanal individuell erzeugt wird.

Ein entsprechendes (z.B. Radar-) Mehrkanalempfangssystem 600 ist in **Fig. 6** dargestellt. Das Mehrkanalempfangssystem 600 umfasst eine Mehrzahl von N Empfängerschaltungen 610-1, 610-2, ..., 610-N für eine Mehrzahl von N Empfangskanälen. Ferner umfasst das Mehrkanalempfangssystem 600 eine Mehrzahl von M Empfangselementen 620-1, 620-2, ..., 620-M. Die Anzahl M an Empfangselementen kann gleich der Anzahl N an Empfängerschaltungen sein, so dass jeder der Empfängerschaltungen 610-1, 610-2, ..., 610-N ein jeweiliges der Mehrzahl an Empfangselementen 620-1, 620-2, ..., 620-M zugeordnet ist. Alternativ kann die Anzahl M an Empfangselementen auch von der Anzahl N an Empfängerschaltungen verschieden sein. Beispielsweise kann die Anzahl M an Empfangselementen doppelt so groß wie die Anzahl N an Empfängerschaltungen sein, so dass jeder der Empfängerschaltungen 610-1, 610-2, ..., 610-N zwei der Mehrzahl an Empfangselementen 620-1, 620-2, ..., 620-M zugeordnet sind. Die Mehrzahl an Empfangselementen 620-1, 620-2, ..., 620-M können z.B. Antennen sein.

Während des (Empfangs- bzw. Normal)Betriebs des Mehrkanalempfangssystems 100 empfangen die Mehrzahl an Empfangselementen 620-1, 620-2, ..., 620-M eine oder mehrere elektromagnetische Wellen 640 (z.B. Radarwellen) und geben jeweils ein Empfangssignal 621-1, 621-2, ..., 621-N für den jeweiligen Empfangskanal an die zugeordnete Empfängerschaltung der Mehrzahl an Empfängerschaltungen 610-1, 610-2, ..., 610-N aus.

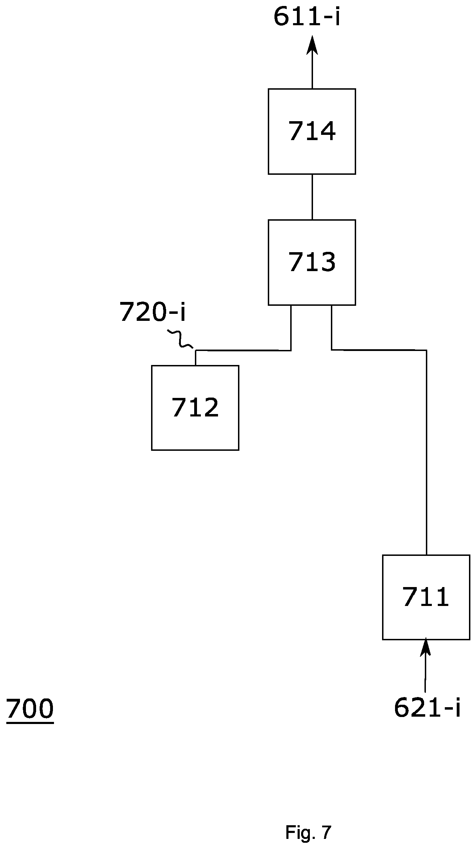

Fig. 7 zeigt eine Empfängerschaltung 700. Zumindest die erste Empfängerschaltung 610-1 und die zweite Empfängerschaltung 610-2 der Mehrzahl an Empfängerschaltungen 610-1, 610-2, ..., 610-N des Mehrkanalempfangssystems 600 sind dabei wie die Empfängerschaltung 700 ausgebildet. Optional können auch die weiteren Empfängerschaltungen der Mehrzahl an Empfängerschaltungen 610-1, 610-2, ..., 610-N wie die Empfängerschaltung 700 ausgebildet sein.

Die Empfängerschaltung 700 umfasst einen Signaleingang 711, der mit dem der jeweiligen Empfängerschaltung zugeordneten Empfangselement der Mehrzahl an Empfangselementen 140-1, 140-2, ..., 140-M koppelbar ist bzw. gekoppelt ist, um das Empfangssignal 621-i für den jeweiligen Empfangskanal i zu empfangen (i =1 ... N).

Die Empfängerschaltung 700 umfasst weiterhin eine Signalverarbeitungsschaltung 714, die ausgebildet ist, basierend auf einem (z.B. analogen) Eingangssignal ein jeweiliges digitales Ausgangssignal 611-i der Empfängerschaltung 700 zu erzeugen. Bezogen auf die Mehrzahl an Empfängerschaltungen 610-1, 610-2, ..., 610-N des Mehrkanalempfangssystems 600 bedeutet dies, dass die jeweilige Signalverarbeitungsschaltung 714 zumindest der ersten Empfängerschaltung 610-1 und der zweiten Empfängerschaltung 610-2 ausgebildet ist, basierend auf einem jeweiligen Eingangssignal bzw. das digitale Ausgangssignal 611-1 bzw. 611-2 der jeweiligen Empfängerschaltung 610-1 bzw. 610-2 zu erzeugen. Optional können auch die Signalverarbeitungsschaltungen der weiteren Empfängerschaltungen der Mehrzahl an Empfängerschaltungen 610-1, 610-2, ..., 610-N derart ausgebildet sein, um ein jeweiliges digitales Ausgangssignal 611-1, 611-2, ..., 611-N bereitzustellen.

Die Signalverarbeitungsschaltung 714 kann eine Vielzahl an Komponenten zur Verarbeitung des Eingangssignals aufweisen. Beispielsweise kann die Signalverarbeitungsschaltung 714 eines oder mehrere Filter, einen oder mehrere Verstärker, einen oder mehrere Begrenzer, einen oder mehrere Phasenschieber, eines oder mehrere Dämpfungsglieder und/oder einen oder mehrere Analog-zu-Digital Wandler umfassen. Dabei ist jedoch zu beachten, dass die vorgenannten Komponenten rein beispielhaft gewählt sind und die Signalverarbeitungsschaltung 714 auch weniger, mehr oder andere Komponenten aufweisen kann.

Ferner umfasst die Empfängerschaltung 700 eine Verteilerschaltung 713, die ausgebildet ist, das jeweilige Empfangssignal 621-i selektiv als Eingangssignal an die Signalverarbeitungsschaltung 714 anzulegen. Dazu kann die Verteilerschaltung 713 z.B. einen oder mehrere miteinander gekoppelte Schalter aufweisen. Entsprechend kann z.B. während des (Empfangs- bzw. Normal-)Betriebs des Mehrkanalempfangssystems 600 das jeweilige Empfangssignal 621-i an die Signalverarbeitungsschaltung 714 angelegt werden, so dass das jeweilige digitale Ausgangssignal 611-i auf dem jeweiligen Empfangssignal 621-i basiert.

Für die Kalibrierung der Empfängerschaltung 700 umfasst diese einen Signalgenerator 712. Der Signalgenerator 712 ist ausgebildet, ein für die jeweilige Empfängerschaltung individuell phasenmoduliertes Kalibrierungssignal 720-i zu erzeugen. Der Signalgenerator 712 kann z.B. einen oder mehrere Oszillatoren und/oder eine oder mehrere Phasenregelschleifen umfassen für die Erzeugung des individuell phasenmodulierten Kalibrierungssignals 720-i. Bezogen auf die Mehrzahl an Empfängerschaltungen 610-1, 610-2, ..., 610-N des Mehrkanalempfangssystems 600 bedeutet dies, dass der Signalgenerator 712 der ersten Empfängerschaltung 610-1 ein erstes Kalibrierungssignal erzeugt, das für die Empfängerschaltung 610-1 individuell phasenmoduliert ist, während der Signalgenerator 712 der zweiten Empfängerschaltung 610-2 ein zweites Kalibrierungssignal erzeugt, das für die Empfängerschaltung 610-2 individuell phasenmoduliert ist. Mit anderen Worten: Der jeweilige Signalgenerator zumindest der ersten Empfängerschaltung 610-1 und der zweiten Empfängerschaltung 610-2 ist jeweils ausgebildet, ein Kalibrierungssignal zu erzeugen, das für die jeweilige Empfängerschaltung 610-1 bzw. 610-2 individuell phasenmoduliert ist. Optional können auch die Signalgeneratoren der weiteren Empfängerschaltungen der Mehrzahl an Empfängerschaltungen 610-1, 610-2, ..., 610-N derart ausgebildet sein.

Das von dem Signalgenerator 712 der ersten Empfängerschaltung 610-1 erzeugte Kalibrierungssignal für die erste Empfängerschaltung 610-1 und das von dem Signalgenerator der zweiten Empfängerschaltung 610-2 erzeugte Kalibrierungssignal für die zweite Empfängerschaltung sind unterschiedlich phasenmoduliert. Beispielsweise kann das von dem Signalgenerator 712 der ersten Empfängerschaltung 610-1 erzeugte Kalibrierungssignal für die erste Empfängerschaltung 610-1 und das von dem Signalgenerator der zweiten Empfängerschaltung 610-2 erzeugte Kalibrierungssignal für die zweite Empfängerschaltung 610-2 zueinander phasenverschoben (und z.B. ansonsten identisch) sein.

Ähnlich wie oben für die Empfängerschaltung 200 beschrieben, kann auch die Empfängerschaltung 700 eine oder mehrere Komponenten zur weiteren Verarbeitung des jeweiligen Kalibrierungssignals 220-i aufweisen (z.B. ein Dämpfungsglied).

Die Verteilerschaltung 713 ist ferner ausgebildet, das jeweilige individuell phasenmodulierte Kalibrierungssignal 720-i selektiv als Eingangssignal an die Signalverarbeitungsschaltung 714 anzulegen. Während der Kalibrierung kann entsprechend das von dem Signalgenerator 712 der Empfängerschaltung 700 jeweils erzeugte Kalibrierungssignal 720-i an die Signalverarbeitungsschaltung 714 angelegt werden, so dass das jeweilige digitale Ausgangssignal 111-i auf dem jeweiligen Kalibrierungssignal 720-i basiert.

Wieder Bezug nehmend auf Fig. 6 umfasst das Mehrkanalempfangssystem 600 ferner eine Auswerteschaltung 630, die ausgebildet ist, von zumindest der ersten Empfängerschaltung 610-1 und der zweiten Empfängerschaltung 610-2 das jeweilige Kalibrierungssignal und das jeweilige digitale Ausgangssignal 611-1 bzw. 611-2 zu erhalten. Beispielsweise können die erste Empfängerschaltung 610-1 und die zweite Empfängerschaltung 610-2 einen oder mehrere jeweilige Signalausgänge aufweisen, die mit der Auswerteschaltung 630 koppelbar sind bzw. gekoppelt sind und das jeweilige Kalibrierungssignal und das jeweilige digitale Ausgangssignal 611-1 bzw. 611-2 ausgeben. Die weiteren Empfängerschaltungen der Mehrzahl an Empfängerschaltungen 610-1, 610-2, ..., 610-N können entsprechend ausgeführt sein.

Wie zuvor beschrieben basiert das jeweilige digitale Ausgangssignal 611-1 bzw. 611-2 der ersten Empfängerschaltung 610-1 und der zweiten Empfängerschaltung 610-2 während der Kalibrierung auf dem von dem Signalgenerator 712 der jeweiligen Empfängerschaltung 610-1 bzw. 610-2 jeweils erzeugten individuellen Kalibrierungssignal. Da der Auswerteschaltung 630 sowohl das Eingangssignal der jeweiligen Signalverarbeitungsschaltung 714 der ersten Empfängerschaltung 610-1 und der zweiten Empfängerschaltung 610-2 in Form der Kalibrierungssignale als auch die jeweiligen digitalen Ausgangssignale 611-1 und 611-2 der der jeweiligen Signalverarbeitungsschaltung 714 der ersten Empfängerschaltung 610-1 und der zweiten Empfängerschaltung 610-2 bereitgestellt werden, kann diese wiederum das jeweilige Übertragungsverhalten der ersten Empfängerschaltung 610-1 und der zweiten Empfängerschaltung 610-2 bzw. das Übertragungsverhalten der Signalverarbeitungsschaltungen der ersten Empfängerschaltung 610-1 und der zweiten Empfängerschaltung 610-2 durch einen entsprechenden Signalabgleich bestimmen. Dies kann gemäß bekannter Verfahren erfolgen.

Bezogen auf die Mehrzahl an Empfängerschaltungen 610-1, 610-2, ..., 610-N des Mehrkanalempfangssystems 600 kann die Auswerteschaltung 630 entsprechend ausgebildet sein, von jeder der Mehrzahl an Empfängerschaltung 610-1, 610-2, ..., 610-N das jeweilige Kalibrierungssignal und das jeweilige auf dem jeweiligen Kalibrierungssignal basierende digitale Ausgangssignal 611-1, 611-2, ..., 611-N zu erhalten. Entsprechend kann die Auswerteschaltung 630 ausgebildet sein, das jeweilige Übertragungsverhalten jeder der Mehrzahl an Empfängerschaltung 610-1, 610-2, ..., 610-N basierend auf dem jeweiligen Kalibrierungssignal und dem jeweiligen digitalen Ausgangssignal 611-1, 611-2, ..., 611-N zu bestimmen.

Aufgrund der individuellen Phasenmodulation des Kalibrierungssignals für den jeweiligen Empfangskanal bzw. die jeweilige Empfängerschaltung kann für die Auswerteschaltung 630 eine eindeutige Diskriminierung des jeweiligen Kalibrierungssignals von sonstigen, eingekoppelten Störanteilen ermöglicht werden. Insbesondere kann bei der Signalauswertung durch die Auswerteschaltung 630 das jeweilige Kalibrierungssignal aus dem empfangenen Gesamtspektrum extrahiert und somit eine eindeutige Bestimmung des Übertragungsverhaltens des jeweiligen Empfangskanals ermöglicht werden. Entsprechend ist eine simultane Kalibrierung der Empfangskanäle möglich. Beispielsweise können so zumindest die erste Empfängerschaltung 610-1 und die zweite Empfängerschaltung 610-2 parallel kalibriert werden.

Die Empfängerschaltungen 610-1, 610-2, ..., 610-N können dabei, ähnlich wie in Zusammenhang mit Fig. 3 beschrieben, weitere Signaleingänge für weitere Empfangssignale eines Empfangskanals umfassen. Entsprechend kann die Signalverarbeitungsschaltung angepasst sein und z.B. Signalverarbeitungspfade für die einzelnen Empfangssignale des jeweiligen Empfangskanals aufweisen.

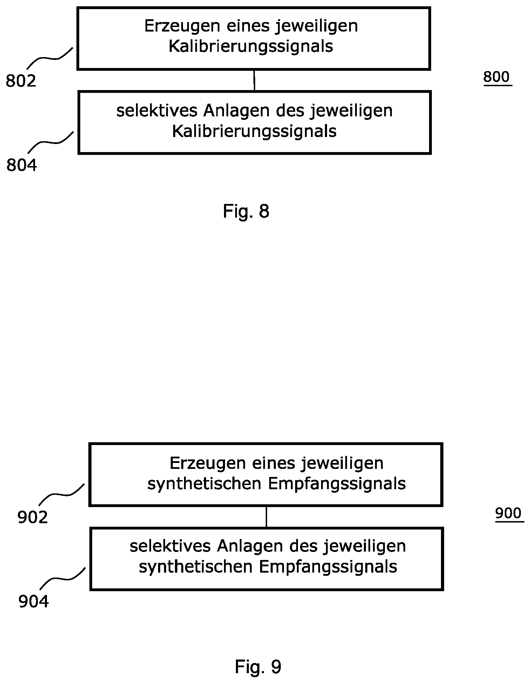

Um die vorgenannten Aspekte zur Kalibrierung des Mehrkanalempfangssystems 600 nochmals zusammenzufassen ist in **Fig. 8** ferner ein Ablaufdiagramm eines Verfahrens 800 zum Kalibrieren eines Mehrkanalempfangssystems dargestellt. Analog zu dem oben Beschriebenen umfasst das Mehrkanalempfangssystem eine Mehrzahl an Empfängerschaltungen für eine Mehrzahl an Empfangskanälen. Zumindest eine erste Empfängerschaltung und eine zweite Empfängerschaltung der Mehrzahl an Empfängerschaltungen umfassen jeweils einen Signaleingang, der mit einem der jeweiligen Empfängerschaltung zugeordneten Empfangselement koppelbar ist, um ein Empfangssignal für den jeweiligen Empfangskanal zu empfangen. Ferner umfassen zumindest die erste Empfängerschaltung und die zweite Empfängerschaltung jeweils eine Signalverarbeitungsschaltung, die ausgebildet ist, basierend auf einem Eingangssignal ein digitales Ausgangssignal der jeweiligen Empfängerschaltung zu erzeugen.

Für zumindest die erste Empfängerschaltung und die zweite Empfängerschaltung umfasst das Verfahren 800 ein (z.B. paralleles bzw. simultanes) Erzeugen 802 eines Kalibrierungssignals, das für die jeweilige Empfängerschaltung individuell phasenmoduliert ist, durch einen jeweiligen Signalgenerator der jeweiligen Empfängerschaltung. Ferner umfasst das Verfahren 800 für zumindest die erste Empfängerschaltung und die zweite Empfängerschaltung ein selektives Anlegen 804 des von dem Signalgenerator der jeweiligen Empfängerschaltung erzeugten Kalibrierungssignals an die jeweilige Signalverarbeitungsschaltung durch eine jeweilige Verteilerschaltung der jeweiligen Empfängerschaltung.

Gemäß dem Verfahren 800 kann für den jeweiligen Empfangskanal bzw. die jeweilige Empfängerschaltung ein hinsichtlich der Phase individuell moduliertes Kalibrierungssignal bereitgestellt werden. Bei einer anschließende Signalauswertung kann das jeweilige Kalibrierungssignal aus dem empfangenen Gesamtspektrum extrahiert und somit eine eindeutige Bestimmung des Übertragungsverhaltens des jeweiligen Empfangskanals ermöglicht werden. Entsprechend ist eine simultane Kalibrierung der Empfangskanäle möglich.

Weitere Details und Aspekte des Verfahrens 800 sind vorangehend in Zusammenhang mit den Figs. 6 und 7 näher beschrieben. Das Verfahren 800 kann daher zusätzlich einen oder mehrere der vorangehend beschriebenen Aspekte umfassen.

Das vorangehend beschriebene Mehrkanalempfangssystem 600 kann gemäß einem weiteren Aspekt auch zum Simulieren eines Empfangs einer vorbestimmten Welle genutzt werden. Dies wird nachfolgend unter Bezugnahme auf **Fig. 9** näher beschrieben. Fig. 9 zeigt ein Ablaufdiagramm eines Verfahrens 900 zum Simulieren eines Empfangs einer vorbestimmten Welle an einem Mehrkanalempfangssystem wie dies vorangehend in Zusammenhang mit den Figs. 6 und 7 beschrieben wurde.

Wie oben in Zusammenhang mit Fig. 6 und Fig. 7 näher beschrieben, ist der Signaleingang 711 jeder der Mehrzahl an Empfängerschaltungen 610-1, 610-2, ..., 610-N mit einem der jeweiligen Empfängerschaltung zugeordneten Empfangselement 620-1, 620-2 ..., 620-M koppelbar bzw. gekoppelt, um ein reales Empfangssignal 621-1, 621-2, ..., 621-N für den jeweiligen Empfangskanal von dem jeweils zugeordneten Empfangselement 620-1, 620-2 ..., 620-M zu empfangen.

Ferner kann der jeweilige Signalgenerator 712 der Mehrzahl an Empfängerschaltungen 610-1, 610-2, ..., 610-N genutzt werden, um den Empfang der vorbestimmten Welle zu simulieren.

Das Verfahren 900 umfasst für zumindest eine Teilmenge der Mehrzahl an Empfängerschaltungen 610-1, 610-2, ..., 610-N ein (z.B. paralleles bzw. simultanes) Erzeugen 902 eines synthetischen Empfangssignals für die jeweilige Empfängerschaltung durch den jeweiligen Signalgenerator 712 der jeweiligen Empfängerschaltung basierend auf Informationen, die für den jeweiligen Empfangskanal ein erwartetes Empfangssignal bei tatsächlichem Empfang der vorbestimmten Welle durch das der jeweiligen Empfängerschaltung zugeordnete Empfangselement anzeigen. Optional kann für jede Empfängerschaltung der Mehrzahl an Empfängerschaltungen 610-1, 610-2, ..., 610-N ein synthetisches Empfangssignal für die jeweilige Empfängerschaltung durch den jeweiligen Signalgenerator der jeweiligen Empfängerschaltung erzeugt werden.

Beispielsweise erzeugt der Signalgenerator 712 der ersten Empfängerschaltung 610-1 ein erstes synthetisches Empfangssignal für die Empfängerschaltung 610-1 basierend auf Informationen, die für diesen Empfangskanal das erwartete Empfangssignal bei tatsächlichem Empfang der vorbestimmten Welle durch das der Empfängerschaltung 610-1 zugeordnete Empfangselement 620-1 anzeigen. Entsprechend erzeugt der Signalgenerator 712 der zweiten Empfängerschaltung 610-2 ein zweites synthetisches Empfangssignal für die Empfängerschaltung 610-2 basierend auf Informationen, die für diesen Empfangskanal das erwartete Empfangssignal bei tatsächlichem Empfang der vorbestimmten Welle durch das der Empfängerschaltung 610-2 zugeordnete Empfangselement 620-2 anzeigen. Das jeweilige synthetische Empfangssignal gibt das jeweilige erwartete Empfangssignal bei tatsächlichem Empfang der vorbestimmten Welle durch das der jeweiligen Empfängerschaltung zugeordnete Empfangselement an.

Ferner umfasst das Verfahren 900 ein selektives Anlegen 904 des von dem Signalgenerator der jeweiligen Empfängerschaltung erzeugten synthetischen Empfangssignals an die Signalverarbeitungsschaltung der jeweiligen Empfängerschaltung. Beispielsweise legt die Verteilerschaltung 713 der ersten Empfängerschaltung 610-1 das vom Signalgenerator 712 der Empfängerschaltung 610-1 erzeugte synthetische Empfangssignal an die Signalverarbeitungsschaltung 714 der Empfängerschaltung 610-1 an. Entsprechend legt die Verteilerschaltung 713 der zweiten Empfängerschaltung 610-2 das vom Signalgenerator 712 der Empfängerschaltung 610-2 erzeugte synthetische Empfangssignal an die Signalverarbeitungsschaltung 714 der Empfängerschaltung 610-2 an.

Entsprechend kann für jeden gewünschten Empfangskanal durch den jeweilige Signalgenerator ein synthetisches Empfangssignal anstatt des Kalibrierungssignals erzeugt und an die jeweilige Signalverarbeitungsschaltung angelegt werden, um so den Empfang der vorbestimmten Welle an dem Mehrkanalempfangssystem 600 zu simulieren. Somit ist die Möglichkeit der Nachbildung des Empfangs einer z.B. beliebig orientierten ebenen Welle mit der Empfangsapertur gegeben.

Die obigen Ausführungsbeispiele ermöglichen somit zum einen eine phasenmodulationsbasierte, interne Empfängerkalibration als auch eine Empfangssystemverifikation für Multisensorempfangssysteme.

Die vorgeschlagene Architektur kann z.B. in Phased-Array-Radaren und sonstigen kohärenten Multisensorempfangssystemen eingesetzt werden. Entsprechend können das Mehrkanalempfangssystem 100 bzw. das Mehrkanalempfangssystem 600 ein Phased-Array-Radar oder ein sonstiges kohärentes Multisensorempfangssystem sein.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

## Patentansprüche

1. Mehrkanalempfangssystem (100) umfassend:
eine Mehrzahl an Empfängerschaltungen (110-1, ..., 110-N) für eine Mehrzahl an Empfangskanälen, wobei zumindest eine erste Empfängerschaltung und eine zweite Empfängerschaltung der Mehrzahl an Empfängerschaltungen (110-1, ..., 110-N) jeweils Folgendes umfassen:
einen Signaleingang (211, 311), der ausgebildet ist, ein vorbestimmtes Referenzsignal (121) zu empfangen; und
eine Modulationsschaltung (213, 317), die ausgebildet ist, das Referenzsignal (121) basierend auf einem jeweiligen Steuerungssignal (131-i) zu modulieren, um ein Kalibrierungssignal (220-i) für die jeweilige Empfängerschaltung zu erzeugen;
eine Speiseschaltung (120), die ausgebildet ist, das vorbestimmte Referenzsignal (121) an den jeweiligen Signaleingang (211, 311) zumindest der ersten Empfängerschaltung und der zweiten Empfängerschaltung anzulegen; und
eine Steuerschaltung (130), die ausgebildet ist, das jeweilige Steuerungssignal (131-i) für zumindest die erste Empfängerschaltung und die zweite Empfängerschaltung derart zu erzeugen, dass das Referenzsignal (121) von der jeweiligen Modulationsschaltung (213, 317) für die jeweilige Empfängerschaltung individuell phasenmoduliert wird.

2. Mehrkanalempfangssystem (100) nach Anspruch 1, wobei das von der Modulationsschaltung (213, 317) der ersten Empfängerschaltung erzeugte Kalibrierungssignal für die erste Empfängerschaltung und das von der Modulationsschaltung (213, 317) der zweiten Empfängerschaltung erzeugte Kalibrierungssignal für die zweite Empfängerschaltung unterschiedlich phasenmoduliert sind.

3. Mehrkanalempfangssystem (100) nach Anspruch 1 oder Anspruch 2, wobei das von der Modulationsschaltung (213, 317) der ersten Empfängerschaltung erzeugte Kalibrierungssignal für die erste Empfängerschaltung und das von der Modulationsschaltung (213, 317) der zweiten Empfängerschaltung erzeugte Kalibrierungssignal für die zweite Empfängerschaltung zueinander phasenverschobene Replikate des Referenzsignals (121) sind.

4. Mehrkanalempfangssystem (100) nach einem der Ansprüche 1 bis 3, ferner umfassend eine Auswerteschaltung (150), die ausgebildet ist:
von zumindest der ersten Empfängerschaltung und der zweiten Empfängerschaltung das jeweilige Kalibrierungssignal (220-i) und ein jeweiliges digitales Ausgangssignal (111-i), welches auf dem Kalibrierungssignal (220-i) basiert, zu erhalten; und
ein jeweiliges Übertragungsverhalten von zumindest der ersten Empfängerschaltung und der zweiten Empfängerschaltung basierend auf dem jeweiligen Kalibrierungssignal (220-i) und dem jeweiligen digitalen Ausgangssignal (111-i) zu bestimmen.

5. Mehrkanalempfangssystem (100) nach einem der Ansprüche 1 bis 4, wobei zumindest die erste Empfängerschaltung und die zweite Empfängerschaltung der Mehrzahl an Empfängerschaltungen (110-1, ..., 110-N) jeweils Folgendes umfassen:
einen zweiten Signaleingang (212), der mit einem der jeweiligen Empfängerschaltung zugeordneten Empfangselement (140-1, ..., 140-M) koppelbar ist, um ein Empfangssignal (141-i) für den jeweiligen Empfangskanal zu empfangen;
eine Signalverarbeitungsschaltung (216, 319), die ausgebildet ist, basierend auf einem Eingangssignal ein digitales Ausgangssignal der jeweiligen Empfängerschaltung zu erzeugen; und
eine Verteilerschaltung, die ausgebildet ist, das jeweilige Empfangssignal (141-i) oder das von der Modulationsschaltung (213, 317) der jeweiligen Empfängerschaltung erzeugte Kalibrierungssignal (220-i) selektiv als Eingangssignal an die Signalverarbeitungsschaltung (216, 319) anzulegen.

6. Mehrkanalempfangssystem (100) nach Anspruch 5, wobei zumindest die erste Empfängerschaltung und die zweite Empfängerschaltung der Mehrzahl an Empfängerschaltungen (110-1, ..., 110-N) jeweils ferner einen dritten Signaleingang (313), der mit einem weiteren der jeweiligen Empfängerschaltung zugeordneten Empfangselement koppelbar ist, um ein weiteres Empfangssignal (142-i) für den jeweiligen Empfangskanal zu empfangen, umfassen, wobei das Empfangssignal (141-i) und das weitere Empfangssignal (142-i) unterschiedliche Polarisationen aufweisen, wobei die Signalverarbeitungsschaltung (319) einen ersten Signalverarbeitungspfad (319-1) für das Empfangssignal und einen zweiten Signalverarbeitungspfad (319-2) für das weitere Empfangssignal (142-i) umfasst, und wobei die Verteilerschaltung ausgebildet ist:
das jeweilige Empfangssignal (141-i) oder das von der Modulationsschaltung (213, 317) der jeweiligen Empfängerschaltung erzeugte Kalibrierungssignal (220-i) selektiv als Eingangssignal an den ersten Signalverarbeitungspfad (319-1) anzulegen; und/oder
das jeweilige weitere Empfangssignal (142-i) oder das von der Modulationsschaltung (213, 317) der jeweiligen Empfängerschaltung erzeugte Kalibrierungssignal (220-i) selektiv als Eingangssignal an den zweiten Signalverarbeitungspfad (319-2) anzulegen.

7. Mehrkanalempfangssystem (100) nach Anspruch 5 oder Anspruch 6, ferner umfassend, ein Dämpfungsglied (214), das ausgebildet ist, einen Signalpegel des von der Modulationsschaltung (213, 317) der jeweiligen Empfängerschaltung erzeugten Kalibrierungssignals (220-i) auf einen vorbestimmten Wert einzustellen.

8. Mehrkanalempfangssystem (100) nach einem der Ansprüche 1 bis 7, wobei die Modulationsschaltung (213, 317) ein steuerbarer Phasenschieber oder ein steuerbares Verzögerungselement ist.

9. Mehrkanalempfangssystem (100) nach einem der Ansprüche 1 bis 8, ferner umfassend einen Signalgenerator, der mit der Speiseschaltung (120) gekoppelt und ausgebildet ist, das Referenzsignal (121) zu erzeugen.

10. Mehrkanalempfangssystem (100) nach einem der Ansprüche 1 bis 8, ferner umfassend einen Referenzsignaleingang, der mit der Speiseschaltung (120) gekoppelt und ausgebildet ist, das Referenzsignal (121) von einem externen Signalgenerator zu empfangen.

11. Mehrkanalempfangssystem (100) nach einem der Ansprüche 1 bis 10, wobei auch die weiteren Empfängerschaltungen der Mehrzahl an Empfängerschaltungen (110-1, ..., 110-N) jeweils einen Signaleingang (211, 311) und eine Modulationsschaltung (213, 317), die wie der Signaleingang (211, 311) und die Modulationsschaltung (213, 317) der ersten und der zweiten Empfängerschaltung ausgebildet sind, umfassen, wobei die Speiseschaltung (120) ausgebildet ist, das vorbestimmte Referenzsignal (121) an den jeweiligen Signaleingang (211, 311) jeder der Mehrzahl an Empfängerschaltungen (110-1, ..., 110-N) anzulegen, und wobei die Steuerschaltung (130) ausgebildet ist, das jeweilige Steuerungssignal (131-i) für jede der Mehrzahl an Empfängerschaltungen (110-1, ..., 110-N) derart zu erzeugen, dass das Referenzsignal (121) von der jeweiligen Modulationsschaltung (213, 317) der jeweiligen Empfängerschaltung individuell phasenmoduliert wird.

12. Verfahren (400) zum Kalibrieren eines Mehrkanalempfangssystems umfassend eine Mehrzahl an Empfängerschaltungen für eine Mehrzahl an Empfangskanälen, wobei zumindest eine erste Empfängerschaltung und eine zweite Empfängerschaltung der Mehrzahl an Empfängerschaltungen jeweils einen Signaleingang, der ausgebildet ist, ein vorbestimmtes Referenzsignal zu empfangen, und eine Modulationsschaltung, die ausgebildet ist, das Referenzsignal basierend auf einem Steuerungssignal zu modulieren, um ein Kalibrierungssignal für die jeweilige Empfängerschaltung zu erzeugen, umfassen, das Verfahren umfassend:
Anlegen (402) des vorbestimmten Referenzsignals an den jeweiligen Signaleingang zumindest der ersten Empfängerschaltung und der zweiten Empfängerschaltung; und
Erzeugen (404) des jeweiligen Steuerungssignal für zumindest die erste Empfängerschaltung und die zweite Empfängerschaltung derart, dass das Referenzsignal von der jeweiligen Modulationsschaltung für die jeweilige Empfängerschaltung individuell phasenmoduliert wird.

13. Mehrkanalempfangssystem (600) umfassend eine Mehrzahl an Empfängerschaltungen (610-1, ..., 610-N) für eine Mehrzahl an Empfangskanälen, wobei zumindest eine erste Empfängerschaltung und eine zweite Empfängerschaltung der Mehrzahl an Empfängerschaltungen (610-1, ..., 610-N) jeweils Folgendes umfassen:
einen Signaleingang (711), der mit einem der jeweiligen Empfängerschaltung zugeordneten Empfangselement koppelbar ist, um ein Empfangssignal (621-i) für den jeweiligen Empfangskanal zu empfangen;
einen Signalgenerator (712), der ausgebildet ist, ein Kalibrierungssignal (720-i) zu erzeugen, das für die jeweilige Empfängerschaltung individuell phasenmoduliert ist;
eine Signalverarbeitungsschaltung (714), die ausgebildet ist, basierend auf einem Eingangssignal ein digitales Ausgangssignal (611-i) der jeweiligen Empfängerschaltung zu erzeugen; und
eine Verteilerschaltung (713), die ausgebildet ist, das jeweilige Empfangssignal (621-i) oder das von dem Signalgenerator der jeweiligen Empfängerschaltung erzeugte Kalibrierungssignal (720-i) selektiv als Eingangssignal an die Signalverarbeitungsschaltung (714) anzulegen.

14. Mehrkanalempfangssystem (600) nach Anspruch 13, wobei das von dem Signalgenerator (712) der ersten Empfängerschaltung erzeugte Kalibrierungssignal für die erste Empfängerschaltung und das von dem Signalgenerator (712) der zweiten Empfängerschaltung erzeugte Kalibrierungssignal für die zweite Empfängerschaltung unterschiedlich phasenmoduliert sind.

15. Mehrkanalempfangssystem (600) nach Anspruch 13 oder Anspruch 14, wobei das von dem Signalgenerator (712) der ersten Empfängerschaltung erzeugte Kalibrierungssignal für die erste Empfängerschaltung und das von dem Signalgenerator (712) der zweiten Empfängerschaltung erzeugte Kalibrierungssignal für die zweite Empfängerschaltung zueinander phasenverschoben sind.

## Claims

1. A multi-channel reception system (100) comprising:
a plurality of receiver circuits (110-1, ..., 110-N) for a plurality of reception channels, wherein at least a first receiver circuit and a second receiver circuit of the plurality of receiver circuits (110-1, ..., 110-N) each comprise:
a signal input (211, 311) configured to receive a predetermined reference signal (121); and
a modulation circuit (213, 317) configured to modulate the reference signal (121) based on a respective control signal (131-i) to generate a calibration signal (220-i) for the respective receiver circuit;
a feed circuit (120) configured to apply the predetermined reference signal (121) to the respective signal input (211, 311) of at least the first receiver circuit and the second receiver circuit; and
a control circuit (130) configured to generate the respective control signal (131-i) for at least the first receiver circuit and the second receiver circuit such that the reference signal (121) is individually phase modulated by the respective modulation circuit (213, 317) for the respective receiver circuit.

2. The multi-channel reception system (100) according to claim 1, wherein the calibration signal for the first receiver circuit generated by the modulation circuit (213, 317) of the first receiver circuit and the calibration signal for the second receiver circuit generated by the modulation circuit (213, 317) of the second receiver circuit are differently phase modulated.

3. The multi-channel reception system (100) according to claim 1 or claim 2, wherein the calibration signal for the first receiver circuit generated by the modulation circuit (213, 317) of the first receiver circuit and the calibration signal for the second receiver circuit generated by the modulation circuit (213, 317) of the second receiver circuit are mutually phase-shifted replicas of the reference signal (121).

4. The multi-channel reception system (100) according to any one of claims 1 to 3, further comprising an evaluation circuit (150) configured to:
obtain from at least the first receiver circuit and the second receiver circuit the respective calibration signal (220-i) and a respective digital output signal (111-i) based on the calibration signal (220-i); and
determine a respective transmission behavior of at least the first receiver circuit and the second receiver circuit based on the respective calibration signal (220-i) and the respective digital output signal (111-i).

5. The multi-channel reception system (100) according to any one of claims 1 to 4, wherein at least the first receiver circuit and the second receiver circuit of the plurality of receiver circuits (110-1, ..., 110-N) each comprise:
a second signal input (212) couplable to a reception element (140-1, ..., 140-M) associated with the respective receiver circuit to receive a reception signal (141-i) for the respective reception channel;
a signal processing circuit (216, 319) configured to generate a digital output signal of the respective receiver circuit based on an input signal; and
a distribution circuit configured to selectively apply the respective reception signal (141-i) or the calibration signal (220-i) generated by the modulation circuit (213, 317) of the respective receiver circuit as an input signal to the signal processing circuit (216, 319).

6. The multi-channel reception system (100) according to claim 5, wherein at least the first receiver circuit and the second receiver circuit of the plurality of receiver circuits (110-1, ..., 110-N) each further comprise a third signal input (313) couplable to a further reception element associated with the respective receiver circuit to receive a further reception signal (142-i) for the respective reception channel, wherein the reception signal (141-i) and the further reception signal (142-i) have different polarizations, wherein the signal processing circuit (319) comprises a first signal processing path (319-1) for the reception signal and a second signal processing path (319-2) for the further reception signal (142-i), and wherein the distribution circuit is configured to:
selectively apply the respective reception signal (141-i) or the calibration signal (220-i) generated by the modulation circuit (213, 317) of the respective receiver circuit as an input signal to the first signal processing path (319-1); and/or
selectively apply the respective further reception signal (142-i) or the calibration signal (220-i) generated by the modulation circuit (213, 317) of the respective receiver circuit as an input signal to the second signal processing path (319-2).

7. The multi-channel reception system (100) according to claim 5 or claim 6, further comprising an attenuator (214) configured to set a signal level of the calibration signal (220-i) generated by the modulation circuit (213, 317) of the respective receiver circuit to a predetermined value.

8. The multi-channel reception system (100) according to any one of claims 1 to 7, wherein the modulation circuit (213, 317) is a controllable phase shifter or a controllable delay element.

9. The multi-channel reception system (100) according to any one of claims 1 to 8, further comprising a signal generator coupled to the feed circuit (120) and configured to generate the reference signal (121).

10. The multi-channel reception system (100) according to any one of claims 1 to 8, further comprising a reference signal input coupled to the feed circuit (120) and configured to receive the reference signal (121) from an external signal generator.

11. The multi-channel reception system (100) according to any one of claims 1 to 10, wherein also the further receiver circuits of the plurality of receiver circuits (110-1, ..., 110-N) each comprise a signal input (211, 311) and a modulation circuit (213, 317) configured like the signal input (211, 311) and the modulation circuit (213, 317) of the first and the second receiver circuit, wherein the feed circuit (120) is configured to apply the predetermined reference signal (121) to the respective signal input (211, 311) of each of the plurality of receiver circuits (110-1, ..., 110-N), and wherein the control circuit (130) is configured to generate the respective control signal (131-i) for each of the plurality of receiver circuits (110-1, ..., 110-N) such that the reference signal (121) is individually phase modulated by the respective modulation circuit (213, 317) of the respective receiver circuit.

12. A method (400) for calibrating a multi-channel reception system comprising a plurality of receiver circuits for a plurality of reception channels, wherein at least a first receiver circuit and a second receiver circuit of the plurality of receiver circuits each comprise a signal input configured to receive a predetermined reference signal and a modulation circuit configured to modulate the reference signal based on a control signal to generate a calibration signal for the respective receiver circuit, the method comprising:
applying (402) the predetermined reference signal to the respective signal input of at least the first receiver circuit and the second receiver circuit; and
generating (404) the respective control signal for at least the first receiver circuit and the second receiver circuit such that the reference signal is individually phase modulated by the respective modulation circuit for the respective receiver circuit.

13. A multi-channel reception system (600) comprising a plurality of receiver circuits (610-1, ..., 610-N) for a plurality of reception channels, wherein at least a first receiver circuit and a second receiver circuit of the plurality of receiver circuits (610-1, ..., 610-N) each comprise:
a signal input (711) couplable to a reception element associated with the respective receiver circuit to receive a reception signal (621-i) for the respective reception channel;
a signal generator (712) configured to generate a calibration signal (720-i) individually phase modulated for the respective receiver circuit;
a signal processing circuit (714) configured to generate a digital output signal (611-i) of the respective receiver circuit based on an input signal; and
a distribution circuit (713) configured to selectively apply the respective reception signal (621-i) or the calibration signal (720-i) generated by the signal generator of the respective receiver circuit as an input signal to the signal processing circuit (714).

14. The multi-channel reception system (600) according to claim 13, wherein the calibration signal for the first receiver circuit generated by the signal generator (712) of the first receiver circuit and the calibration signal for the second receiver circuit generated by the signal generator (712) of the second receiver circuit are differently phase modulated.

15. The multi-channel reception system (600) according to claim 13 or claim 14, wherein the calibration signal for the first receiver circuit generated by the signal generator (712) of the first receiver circuit and the calibration signal for the second receiver circuit generated by the signal generator (712) of the second receiver circuit are mutually phase-shifted.

## Revendications

1. Système de réception multicanal (100) comprenant :
une pluralité de circuits de réception (110-1, ..., 110-N) pour une pluralité de canaux de réception, dans lequel au moins un premier circuit de réception et un deuxième circuit de réception de la pluralité de circuits de réception (110-1, ..., 110-N) comprennent respectivement ce qui suit :
une entrée de signal (211, 311) qui est configurée pour recevoir un signal de référence prédéterminé (121) ; et
un circuit de modulation (213, 317) qui est configuré pour moduler le signal de référence (121) sur la base d'un signal de commande respectif (131-i) afin de générer un signal de calibrage (220-i) pour le circuit de réception respectif ;
un circuit d'alimentation (120) qui est configuré pour fournir le signal de référence prédéterminé (121) à l'entrée de signal respective (211, 311) au moins du premier circuit de réception et du deuxième circuit de réception ; et
un circuit de commande (130) qui est configuré pour générer le signal de commande respectif (131-i) pour au moins le premier circuit de réception et le deuxième circuit de réception de sorte que le signal de référence (121) soit individuellement modulé en phase par le circuit de modulation respectif (213, 317) pour le circuit de réception respectif.

2. Système de réception multicanal (100) selon la revendication 1, dans lequel le signal de calibrage généré par le circuit de modulation (213, 317) du premier circuit de réception pour le premier circuit de réception et le signal de calibrage généré par le circuit de modulation (213, 317) du deuxième circuit de réception pour le deuxième circuit de réception sont modulés en phase de manière différente.

3. Système de réception multicanal (100) selon la revendication 1 ou la revendication 2, dans lequel le signal de calibrage généré par le circuit de modulation (213, 317) du premier circuit de réception pour le premier circuit de réception et le signal de calibrage généré par le circuit de modulation (213, 317) du deuxième circuit de réception pour le deuxième circuit de réception sont des répliques du signal de référence (121) mutuellement déphasées.

4. Système de réception multicanal (100) selon l'une des revendications 1 à 3, comprenant en outre un circuit d'évaluation (150) qui est configuré pour :
obtenir, à partir d'au moins le premier circuit de réception et le deuxième circuit de réception, le signal de calibrage respectif (220-i) et un signal de sortie numérique respectif (111-i) qui est basé sur le signal de calibrage (220-i) ; et
déterminer un comportement de transmission respectif à partir d'au moins le premier circuit de réception et le deuxième circuit de réception sur la base du signal de calibrage respectif (220-i) et du signal de sortie numérique respectif (111-i).

5. Système de réception multicanal (100) selon l'une des revendications 1 à 4, dans lequel au moins le premier circuit de réception et le deuxième circuit de réception de la pluralité de circuits de réception (110-1, ..., 110-N) comprennent respectivement ce qui suit :
une deuxième entrée de signal (212) qui est couplable à un élément de réception (140-1, ..., 140-M) associé au circuit de réception respectif afin de recevoir un signal de réception (141-i) pour le canal de réception respectif ;
un circuit de traitement de signal (216, 319) qui est configuré pour générer, sur la base d'un signal d'entrée, un signal de sortie numérique du circuit de réception respectif ; et
un circuit de distribution qui est configuré pour fournir le signal de réception respectif (141-i) ou le signal de calibrage (220-i) généré par le circuit de modulation (213, 317) du circuit de réception respectif sélectivement en tant que signal d'entrée au circuit de traitement de signal (216, 319).

6. Système de réception multicanal (100) selon la revendication 5, dans lequel au moins le premier circuit de réception et le deuxième circuit de réception de la pluralité de circuits de réception (110-1, ..., 110-N) comprennent respectivement en outre une troisième entrée de signal (313) qui est couplable à un autre élément de réception associé au circuit de réception respectif afin de recevoir un autre signal de réception (142-i) pour le canal de réception respectif, dans lequel le signal de réception (141-i) et l'autre signal de réception (142-i) présentent des polarisations différentes, dans lequel le circuit de traitement de signal (319) comprend un premier trajet de traitement de signal (319-1) pour le signal de réception et un deuxième trajet de traitement de signal (319-2) pour l'autre signal de réception (142-i), et dans lequel le circuit de distribution est configuré pour :
fournir le signal de réception respectif (141-i) ou le signal de calibrage (220-i) généré par le circuit de modulation (213, 317) du circuit de réception respectif sélectivement en tant que signal d'entrée au premier trajet de traitement de signal (319-1) ; et/ou
fournir l'autre signal de réception respectif (142-i) ou le signal de calibrage (220-i) généré par le circuit de modulation (213, 317) du circuit de réception respectif sélectivement en tant que signal d'entrée au deuxième trajet de traitement de signal (319-2).

7. Système de réception multicanal (100) selon la revendication 5 ou la revendication 6, comprenant en outre un élément d'amortissement (214) qui est configuré pour régler un niveau de signal du signal de calibrage (220-i) généré par le circuit de modulation (213, 317) du circuit de réception respectif à une valeur prédéterminée.

8. Système de réception multicanal (100) selon l'une des revendications 1 à 7, dans lequel le circuit de modulation (213, 317) est un déphaseur commandable ou un élément de retard commandable.

9. Système de réception multicanal (100) selon l'une des revendications 1 à 8, comprenant en outre un générateur de signal qui est couplé au circuit d'alimentation (120) et est configuré pour générer le signal de référence (121).

10. Système de réception multicanal (100) selon l'une des revendications 1 à 8, comprenant en outre une entrée de signal de référence qui est couplée au circuit d'alimentation (120) et est configurée pour recevoir le signal de référence (121) d'un générateur de signal externe.

11. Système de réception multicanal (100) selon l'une des revendications 1 à 10, dans lequel également les autres circuits de réception de la pluralité de circuits de réception (110-1, ..., 110-N) comprennent respectivement une entrée de signal (211, 311) et un circuit de modulation (213, 317) qui sont configurés comme l'entrée de signal (211, 311) et le circuit de modulation (213, 317) du premier et du deuxième circuit de réception, dans lequel le circuit d'alimentation (120) est configuré pour fournir le signal de référence prédéterminé (121) à l'entrée de signal respective (211, 311) de chacun de la pluralité de circuits de réception (110-1, ..., 110-N), et dans lequel le circuit de commande (130) est configuré pour générer le signal de commande respectif (131-i) pour chacun de la pluralité de circuits de réception (110-1, ..., 110-N) de sorte que le signal de référence (121) soit individuellement modulé en phase par le circuit de modulation respectif (213, 317) du circuit de réception respectif.

12. Procédé (400) pour calibrer un système de réception multicanal comprenant une pluralité de circuits de réception pour une pluralité de canaux de réception, dans lequel au moins un premier circuit de réception et un deuxième circuit de réception de la pluralité de circuits de réception comprennent respectivement une entrée de signal qui est configurée pour recevoir un signal de référence prédéterminé, et un circuit de modulation qui est configuré pour moduler le signal de référence sur la base d'un signal de commande afin de générer un signal de calibrage pour le circuit de réception respectif, le procédé comprenant le fait de :
fournir (402) le signal de référence prédéterminé à l'entrée de signal respective au moins du premier circuit de réception et du deuxième circuit de réception ; et
générer (404) le signal de commande respectif pour au moins le premier circuit de réception et le deuxième circuit de réception de sorte que le signal de référence soit individuellement modulé en phase par le circuit de modulation respectif pour le circuit de réception respectif.

13. Système de réception multicanal (600) comprenant une pluralité de circuits de réception (610-1, ..., 610-N) pour une pluralité de canaux de réception, dans lequel au moins un premier circuit de réception et un deuxième circuit de réception de la pluralité de circuits de réception (610-1, ..., 610-N) comprennent respectivement ce qui suit :
une entrée de signal (711) qui est couplable à un élément de réception associé au circuit de réception respectif afin de recevoir un signal de réception (621-i) pour le canal de réception respectif ;
un générateur de signal (712) qui est configuré pour générer un signal de calibrage (720-i) qui est individuellement modulé en phase pour le circuit de réception respectif ;
un circuit de traitement de signal (714) qui est configuré pour générer, sur la base d'un signal d'entrée, un signal de sortie numérique (611-i) du circuit de réception respectif ; et
un circuit de distribution (713) qui est configuré pour fournir le signal de réception respectif (621-i) ou le signal de calibrage (720-i) généré par le générateur de signal du circuit de réception respectif sélectivement en tant que signal d'entrée au circuit de traitement de signal (714).

14. Système de réception multicanal (600) selon la revendication 13, dans lequel le signal de calibrage généré par le générateur de signal (712) du premier circuit de réception pour le premier circuit de réception et le signal de calibrage généré par le générateur de signal (712) du deuxième circuit de réception pour le deuxième circuit de réception sont modulés en phase de manière différente.

15. Système de réception multicanal (600) selon la revendication 13 ou la revendication 14, dans lequel le signal de calibrage généré par le générateur de signal (712) du premier circuit de réception pour le premier circuit de réception et le signal de calibrage généré par le générateur de signal (712) du deuxième circuit de réception pour le deuxième circuit de réception sont mutuellement déphasés.
